# EUROPEAN PATENT APPLICATION

(11) **EP 4 564 983 A1**
(43) Date of publication of application: **04.06.2025**
(21) Application number: 23845715.4
(22) Date of filing: 28.07.2023
(51) Int. Cl.: H04W 74/08

(54) **TIMING ADVANCE COMMAND DETERMINING METHOD AND APPARATUS, TERMINAL DEVICE, AND NETWORK DEVICE**

(30) Priority: 29.07.2022 CN 202210908086
(71) Applicant: Beijing Unisoc Communications Technology Co., Ltd., Beijing 100083 (CN)
(72) Inventor: WANG, Hualei, Beijing 100083 (CN)
(74) Representative: Mewburn Ellis LLP
(86) International application number: PCT/CN2023/109916
(87) International publication number: WO 2024/022511

(57) **Abstract**

Disclosed are a method and an apparatus for determining a timing advance command, a terminal device, and a network device. The method includes the following. A network device sends a random access response (RAR), the RAR being used to determine a timing advance command (TAC) of each parameter in multiple parameters, where types of the multiple parameters include at least one of a transmission configuration indicator (TCI) state, a sounding reference signal (SRS) resource, an SRS resource set, a transmission and reception point (TRP), a control resource set (CORESET) pool identifier, or a timing advance group (TAG) identity. Correspondingly, the terminal device receives the RAR, and determines the TAC of each parameter in the multiple parameters according to the RAR. In the disclosure, multiple parameters that may be involved in a new communication scenario are considered, and the TAC of each parameter is determined according to the RAR. Since the TAC of each parameter indicates TA of each parameter, uplink synchronization enhancement is achieved through the TA of each parameter to adapt to the new communication scenario.

## Description

### TECHNICAL FIELD

This disclosure relates to relates to the field of communication technologies, and in particular, to a method and an apparatus for determining a timing advance command, a terminal device, and a network device.

### BACKGROUND

A standard protocol specified by the 3rd generation partnership project (3GPP) relates to uplink synchronization, that is, uplink signals from different terminal devices at different distances are required to synchronously reach a network device.

The uplink synchronization may be implemented through a timing advance (TA) indicated by a timing advance command (TAC) of a random access response (RAR) in a random access procedure.

At present, uplink synchronization only relates to a communication scenario between terminal devices and one network device or one cell. However, with continuous complexity and refinement of a communication process between terminal devices and network devices, 3GPP may discuss a new communication scenario of communication between the terminal device and one or more network devices in a cell, for example, downlink transmission and/or uplink transmission of multiple transmission and reception points (M-TRP)/ multiple downlink control information based M-TRP (M-DCI based M-TRP). In this case, the new communication scenario may involve uplink synchronization, and therefore, how to enhance uplink synchronization to adapt to the new communication scenario needs further research.

### SUMMARY

Provided are a method and device for determining a timing advance command, a terminal device, and a network device, so as to expect to solve the problem of enhancing uplink synchronization to adapt to a new communication scenario.

In a first aspect, a method for determining a timing advance command is provided in the present disclosure. The method includes the following. A timing advance command (TAC) of each parameter in multiple parameters is determined according to a random access response (RAR). Types of the multiple parameters include at least one of a transmission configuration indicator (TCI) state, a sounding reference signal (SRS) resource, an SRS resource set, a transmission and reception point (TRP), a control resource set (CORESET) pool identifier, or a TAG identity.

It can be seen that, in order to enhance uplink synchronization so as to adapt to a new communication scenario, multiple parameters are considered in the present disclosure, where the parameters may be parameters involved in the new communication scenario. A TAC of each parameter in the multiple parameters is determined according to an RAR. Since the TAC of each parameter may indicate a TA of each parameter, the enhancement of uplink synchronization is achieved by the TA of each parameter to adapt to the new communication scenario.

In a second aspect, a method for determining a timing advance command is provided in the present disclosure. The method includes the following. An RAR is sent, the RAR being used to determine a TAC of each parameter in multiple parameters. Types of the multiple parameters include at least one of a TCI state, an SRS resource, an SRS resource set, a TRP, a CORESET pool identifier, or a TAG identity.

In a third aspect, an apparatus for determining a timing advance command is provided in the present disclosure. The apparatus includes a determining unit. The determining unit is configured to determine a TAC of each parameter in multiple parameters according to an RAR. Types of the multiple parameters include at least one of a TCI state, an SRS resource, an SRS resource set, a TRP, a CORESET pool identifier, or a TAG identity.

In a fourth aspect, an apparatus for determining a timing advance command is provided in the present disclosure. The apparatus includes a sending unit. The sending unit is configured to send an RAR, the RAR being used to determine a TAC of each parameter in multiple parameters. Types of the multiple parameters include at least one of a TCI state, an SRS resource, an SRS resource set, a TRP, a CORESET pool identifier, or a TAG ID.

In the fifth aspect, the steps of the method described in the first aspect are applied to or within a terminal device.

In the sixth aspect, the steps of the method described in the second aspect are applied to or within a network device.

In the seventh aspect, a terminal device is provided in the disclosure. The terminal device includes a processor, a memory, and a computer program or instruction stored in the memory. The processor is configured to execute the computer program or instruction to implement the method in the first aspect.

In the eighth aspect, a network device is provided in the disclosure. The network device includes a processor, a memory, and a computer program or instruction stored in the memory. The processor is configured to execute the computer program or instruction to implement the method in the second aspect.

In the ninth aspect, a chip is provided in the disclosure. The chip includes a processor and a communication interface, and the processor is configured to execute the method in the first aspect or in the second aspect.

In the tenth aspect, a chip module is provided in the disclosure. The chip module includes a transceiver and a chip, the chip includes a processor, and the processor is configured to execute the method in the first aspect or in the second aspect.

In the eleventh aspect, a computer-readable storage medium is provided in the disclosure. The computer-readable storage medium stores a computer program or instruction which, when executed, causes the method in the first aspect or in the second aspect be implemented.

In the twelfth aspect, a computer program product is provided. The computer program product includes a computer program or instruction which, when executed, causes the method in the first aspect or in the second aspect be implemented.

In the thirteenth aspect, a communication system is provided in the disclosure. The communication system includes the terminal device in the seventh aspect and the network device in the eighth aspect.

For beneficial effects brought by the technical solutions of the second aspect to the thirteenth aspect, reference may be made to the technical effects brought by the technical solutions of the first aspect, and details are not repeated herein.

### BRIEF DESCRIPTION OF THE DRAWINGS

To describe the technical solutions in embodiments of the present disclosure more clearly, the following briefly introduces accompanying drawings required for describing the embodiments or the related art.
FIG. 1 is a schematic diagram of an architecture of a communication system according to an embodiment of the present disclosure.
FIG. 2 is a schematic flowchart of a method for determining a timing advance command (TAC) according to an embodiment of the present disclosure.
FIG. 3 is a schematic flowchart of a method for determining a reference signal power according to an embodiment of the present disclosure.
FIG. 4 is a block diagram illustrating functional units of an apparatus for determining a TAC according to an embodiment of the present disclosure.
FIG. 5 is a block diagram illustrating functional units of another apparatus for determining a TAC according to an embodiment of the present disclosure.
FIG. 6 is a block diagram illustrating functional units of an apparatus for determining a reference signal power according to an embodiment of the present disclosure.
FIG. 7 is a schematic structural diagram of a terminal device according to an embodiment of the present disclosure.
FIG. 8 is a schematic structural diagram of a network device according to an embodiment of the present disclosure.

### DETAILED DESCRIPTION

It may be understood that the terms "first", "second", and the like involved in embodiments of the disclosure are used to distinguish different objects rather than describe a particular order. In addition, the terms "include", "include", and "have" as well as variations thereof are intended to cover non-exclusive inclusion. For example, a process, method, software, product, or device including a series of steps or units is not limited to the listed steps or units, on the contrary, it can include other steps or units that are not listed; or other steps or units inherent to the process, method, product, or device can be included either.

The term "embodiment" involved herein means that a particular feature, structure, or feature described in conjunction with the embodiments may be contained in at least one embodiment of the disclosure. The phrase appearing in various places in the specification does not necessarily refer to the same embodiment, nor does it refer to an independent or alternative embodiment that is mutually exclusive with other embodiments. It is explicitly and implicitly understood by those skilled in the art that the embodiments described herein may be combined with other embodiments.

The term "and/or" in embodiments of the disclosure illustrates an association relationship of associated objects, indicating that three relationships can exist, for example, A and/or B may mean A alone, both A and B exist, and B alone. A and B each may be a singular from or a plural form.

The character "/" herein may indicate that the associated objects are in an "or" relationship. In addition, the symbol "/" may represent a division sign, i.e. perform a division operation. For example, A/B can represent A divided by B.

The term "at least one (item) of" or the like in embodiments of the disclosure refers to any combination of these items, including any combination of a single item or multiple items. For example, at least one (item) of a, b, or c can represent the following seven cases: a; b; c; a and b; a and c; b and c; a, b, and c. a, b, and c each may be an element or a set including one or more elements.

The term "equal to" in embodiments of the disclosure can be used in conjunction with greater than and applicable to the technical solution used in the case of greater than; or can be used in conjunction with less than and applicable to the technical solution used in the case of less than. When equal to is used in conjunction with greater than, equal to is not in conjunction with less than. When equal to is used in conjunction with less than, equal to is not in conjunction with greater than.

In embodiments of the disclosure, the terms "associated with", "of", "corresponding/relevant to", "corresponding to", "indicated", "mapping" may sometimes be used interchangeably, or represent the same concept/meaning.

The "connection" in embodiments of the disclosure refers to various manners of connection, such as direct connection or indirect connection, so as to implement communication between devices, which is not limited herein.

The terms "network" and "system" in embodiments of the disclosure can be sometimes be used interchangeably, or represent the same concept/meaning. A communication system is a communication network.

In embodiments of the present disclosure, "include" can sometimes be used interchangeably with "contain," "carry," "bear," etc., or may represent the same concept/meaning.

In embodiments of the present disclosure, the term "configure" can sometimes be used interchangeably with "indicate" or may represent the same concept/meaning.

The following explains relevant content, concepts, meanings, technical problems, technical solutions, and beneficial effects involved in embodiments of this application.

### I. Communication System, Terminal Device, and Network Device.

### 1. Communication System

The technical solutions of embodiments of the disclosure are applicable to various wireless communication systems, for example, a global system of mobile communication (GSM), a code division multiple access (CDMA) system, a wideband code division multiple access (WCDMA) system, a general packet radio service (GPRS), a long term evolution (LTE) system, an advanced LTE (LTE-A) system, a new radio (NR) system, an evolved system of an NR system, an LTE-based access to unlicensed spectrum (LTE-U) system, an NR-based access to unlicensed spectrum (NR-U) system, a non-terrestrial network (NTN) system, a universal mobile telecommunication system (UMTS), a wireless local area network (WLAN), a wireless fidelity (WiFi), a 6th-generation (6G) communication system, or other communication systems, etc.

It may be noted that a conventional wireless communication system generally supports a limited quantity of connections and therefore is easy to implement. However, with development of communication technology, a wireless communication system will not only support conventional wireless communication systems but also support, for example, device to device (D2D) communication, machine to machine (M2M) communication, machine type communication (MTC), vehicle to vehicle (V2V) communication, vehicle to everything (V2X) communication, a narrow band internet of things (NB-IoT), etc. Therefore, the technical solutions in embodiments of the disclosure can also be applied to the wireless communication systems above.

In addition, the technical solutions in embodiments of the disclosure may be applied to a beamforming scenario, a carrier aggregation (CA) scenario, a dual connectivity (DC) scenario, a standalone (SA) deployment scenario, etc.

In embodiments of the disclosure, the spectrum used for communication between terminal devices and network devices or the spectrum used for communication between terminal devices can be a licensed spectrum or an unlicensed spectrum, which is not limited herein. It may be noted that the unlicensed spectrum may be understood as a shared spectrum, and the licensed spectrum may be understood as a non-shared spectrum.

Since each embodiment is described in conjunction with a terminal device and a network device in embodiments of the disclosure, the following provides a specific description of involved terminal devices and network devices.

### 2. Terminal device

The terminal device may be a device with transmitting and/or receiving functions. The terminal device may also be referred to as a terminal, a user equipment (UE), a remote UE, a relay UE, an access terminal, a subscriber unit, a subscriber station, a mobile station, a remote station, a mobile device, a user terminal, a smart terminal, a wireless communication device, a user agent, a user apparatus, etc. It may be noted that relay UE is a terminal device that can provide relay forwarding services to other terminal devices (including remote UEs).

For example, the terminal device may be a mobile phone, a pad, a computer with wireless transceiver functions, a virtual reality (VR) terminal device, an augmented reality (AR) terminal device, a wireless terminal device in industrial control, a wireless terminal device in self driving, a wireless terminal device in remote medicine, a wireless terminal device in smart grid, a wireless terminal device in transportation safety, a wireless terminal device in smart city, or a wireless terminal device in smart home, etc.

For another example, the terminal device may also be referred to as a cellular radio telephone, a cordless telephone, a session initiation protocol (SIP) telephone, a wireless local loop (WLL) station, a personal digital assistant (PDA), a device with wireless communication functions such as a handheld device, a computing device, or other processing devices coupled with a wireless modem, an in-vehicle device, a wearable device, and a terminal in a next-generation communication system (for example, an NR communication system or a 6G communication system), a terminal in a future evolved public land mobile network (PLMN), etc., which is not specifically limited herein.

In some possible embodiments, the terminal device may be deployed on land, which includes indoor or outdoor, handheld, wearable, or in-vehicle. The terminal device may also be deployed on water (such as ships, etc.). The terminal device may also be deployed in the air (such as airplanes, balloons, satellites, etc.).

The terminal may include an apparatus with wireless communication functions, such as a chip system, a chip, a chip module, etc. The chip system may include a chip and other discrete devices.

### 3. Network Device

The network device may be a device with transmitting and/or receiving functions. The network device may be a device used for communication with terminal devices.

In some embodiments, the network device may be responsible for radio resource management (RRM), quality of service (QoS) management, data compression and encryption, data transmission and reception at the air interface side.

In some embodiments, the network device may be a base station (BS) in the communication system or a device deployed in a radio access network (RAN) to provide wireless communication functions.

For example, the network device may be a base transceiver station (BTS) in the GSM or CDMA communication system, a node B (NB) in the WCDMA communication system, an evolved node B (eNB or eNodeB) in the LTE communication system, a next generation evolved node B (ng-eNB) in the NR communication system, a next generation node B (gNB) in the NR communication system, a master node (MN) in a dual link architecture, or a second node or a secondary node (SN) in the dual link architecture, which is not specifically limited herein.

In some possible embodiments, the network device may be devices in a core network (CN), such as access and mobility management function (AMF), user plan function (UPF), etc. The network device may also be an access point (AP) in the WLAN, a relay station, a communication device in the future evolved PLMN, a communication device in the NTN, etc.

In some possible embodiments, the network device may include an apparatus with wireless communication functions, such as a chip system, a chip, a chip module, etc. The chip system may include a chip and other discrete devices.

In some possible embodiments, the network device may be a transmission and reception point (TRP).

In some possible embodiments, the network device can also communicate with an internet protocol (IP) network, for example, the internet, a private IP network, or other data networks.

In some deployments, the network device may be an independent node to implement all functions of the above BS. The network device may include a centralized unit (CU) and a distributed unit (DU), such as a gNB-CU and a gNB-DU. The network device may further include an active antenna unit (AAU). The CU implements some functions of the network device, and the DU implements some other functions of the network device. For example, the CU is responsible for processing non-real-time protocols and services, and implements functions of a radio resource control (RRC) layer, functions of a service data adaptation protocol (SDAP) layer, and functions of a packet data convergence protocol (PDCP) layer. The DU is responsible for processing physical (PHY) layer protocols and real-time services, and implements functions of a radio link control (RLC) layer, functions of a medium access control (MAC) layer, and functions of a PHY layer. In addition, the AAU implements some PHY layer processing functions, radio frequency processing functions, and active-antenna related functions. Since RRC layer information will eventually become PHY layer information, or is transformed from PHY layer information, in this network deployment, it may be considered that higher-layer signaling (such as RRC layer signaling) is transmitted by the DU, or transmitted by both the DU and the AAU. It may be understood that, the network device may include at least one of the CU, the DU, or the AAU. In addition, the CU may be categorized as a network device in the RAN, or may be categorized as a network device in the CN, which is not specifically limited herein.

In some possible embodiments, the network device may be any one of multiple sites that perform coherent joint transmission (CJT) with the terminal device, or another site outside the multiple sites, or another network device that performs network communication with the terminal device, which is not specifically limited herein. The multi-site coherent joint transmission may be that multiple sites perform joint coherent transmission, or different data belonging to the same physical downlink shared channel (PDSCH) is sent from different sites to a terminal device, or multiple sites are virtualized into one site for transmission, and names with the same meaning specified in other standards are also applicable to the present disclosure, that is, the present disclosure does not limit the names of these parameters. A site in multi-site coherent joint transmission may be a remote radio head (RRH), a TRP, a network device, and the like, which is not specifically limited herein.

In some possible embodiments, the network device may be any one of multiple sites that perform non-coherent joint transmission with the terminal device, or another site outside the multiple sites, or another network device that performs network communication with the terminal device, which is not specifically limited herein. The multi-site non-coherent joint transmission may be that multiple sites perform non coherent joint transmission, or different data belonging to the same PDSCH is sent from different sites to a terminal device, and names with the same meaning specified in other standards are also applicable to the present disclosure, that is, the present disclosure does not limit the names of these parameters. A site in multi-site non-coherent joint transmission may be an RRH, a TRP, and the like, which is not specifically limited herein.

It may be noted that the TRP in the disclosure is not limited exclusively to CJT or non-coherent joint transmission (NCJT) scenarios but can also be applicable to other scenarios without specific limitations.

In some possible embodiments of the disclosure, the network device may be mobile. For example, the network device may be a mobile device. Optionally, the network device may be a satellite or a balloon base station. For example, the satellite may be a low earth orbit (LEO) satellite, a medium earth orbit (MEO) satellite, a geostationary earth orbit (GEO) satellite, a high elliptical orbit (HEO) satellite, etc. Optionally, the network device may also be a base station deployed on land or water.

In some possible embodiments of the disclosure, the network device may provide a service for a cell, and the terminal device in the cell may communicate with the network device through transmission resources (for example, spectrum resources). The cell may include a macro cell, a small cell, a metro cell, a micro cell, a pico cell, a femto cell, etc.

### 4. Description of Example

The following exemplarily illustrates a wireless communication system in embodiments of the disclosure.

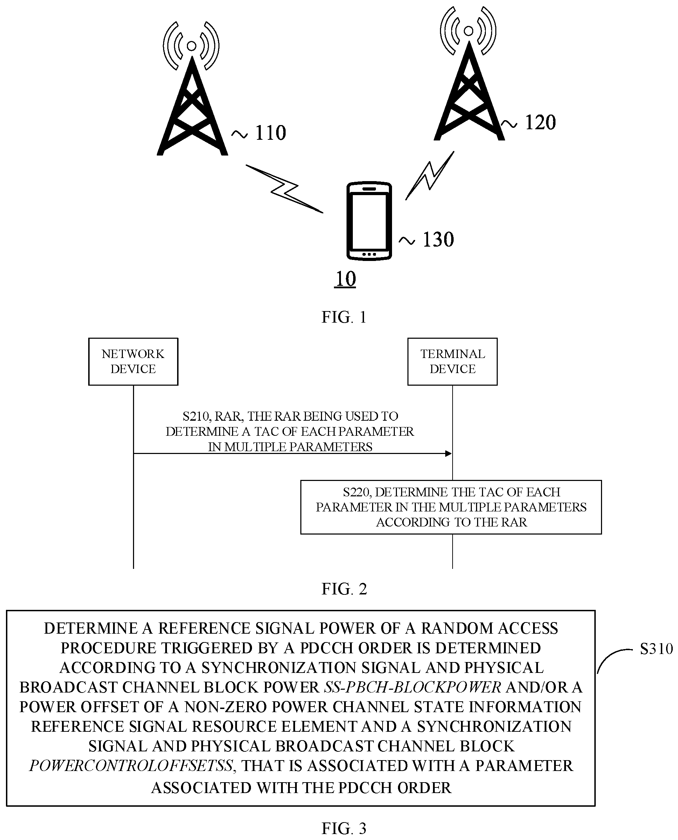

Exemplarily, for a network architecture of the wireless communication system in embodiments of the disclosure, reference can be made to FIG. 1. As illustrated in FIG. 1, the wireless communication system 10 may include a network device 110, a network device 120, and a terminal device 130. The terminal device 130 may communicate with the network device 110 and the network device 120 through a wireless manner.

FIG. 1 is only an example of the network architecture of the wireless communication system, and does not constitute a limitation on the network architecture of the communication system in embodiments of the disclosure. For example, in embodiments of the disclosure, the wireless communication system may further include a processor or other devices. For example, in embodiments of the disclosure, the wireless communication system may include multiple network devices and/or multiple terminal devices.

### II. Random Procedure

It may be noted that the random access procedure can be triggered in the following modes. The random access procedure is trigger by a physical downlink control channel (PDCCH) order. Specifically, a network device may notify, through downlink control information (DCI) format 1_0, a terminal device that a random access procedure needs to be initiated. Optionally, the PDCCH order may also notify the terminal device of a random access preamble index, a synchronization signal (SS) and physical broadcast channel (PBCH) block (SSB) index, a physical random access channel (PRACH) mask index, etc.

The random access procedure may include a contention based random access procedure and a non-contention based random access procedure.

In addition, the random access procedure may include 4-step random access procedure and 2-step random access procedure. Specific description will be given below.

### 1. 4-Step Random Access Procedure

For 4-step random access, the whole procedure may include 4 steps: transmission of a random access request message, transmission of a random access response (RAR), transmission of message 3 (i. e. *Msg3*) and transmission of message 4 (i. e. *Msg4*).

### Step 1, transmission of random access request message

It may be noted that, the terminal device sends a random access request message to the network device, where the random access request message may also be referred to as message 1 (*Msg1*).

Specifically, the random access request message may include a random access preamble, where the main function of the random access preamble is to request for access to the network device, so that the network device can estimate a transmission delay between the network device and the terminal device based on the random access preamble, calibrate the uplink timing advance (TA) according to the transmission delay, and indicate the uplink TA to the terminal device through a timing advance command (TAC) in the RAR.

Specifically, when the terminal device is to send the random access preamble, at least one of the following operations may be executed: selecting an SSB or a channel state information-reference signal (CSI-RS); selecting a random access preamble index, where the random access preamble index may be selected by the terminal device, and may also be indicated by the network device; selecting a PRACH resource for carrying (sending) the random access preamble; or determining a target received power (*PREAMBLE*_*RECEIVED*_*TARGET*_*POWER*) of the random access preamble, etc.

### Step 2, transmission of RAR

It may be noted that the network device receives the random access request message and sends an RAR to the terminal device, where the RAR may also be referred to as message 2 (*Msg2*).

For the network device, the network device performs transmission on a PDSCH payload resource.

For the terminal device, after sending the PRACH preamble, the terminal device monitors the PDCCH for scheduling the RAR in the RAR window to obtain the DCI, and parses PDSCH payload according to the DCI to receive the RAR. If no RAR is received from the network device within the RAR window, then the random access procedure is considered not successful.

In some possible embodiments, the RAR may contain a TAC required for uplink synchronization, an uplink resource required for the terminal device to send message 3, a cell-radio network temporary identifier (C-RNTI), power adjustment, etc.

In conclusion, *Msg1* and *Msg2* in the first two steps of 4-step random access procedure can be used to realize uplink synchronization, while *Msg3* and *Msg4* can designate a unique and legal identity (such as C-RNTI) for the terminal device for subsequent data transmission.

### Step 3, transmission of Msg3

It may be noted that the terminal device receives the RAR and sends *Msg3* to the network device.

In some possible embodiments, *Msg3* may be sent on a physical uplink share channel (PUSCH).

In some possible embodiments, *Msg3* may contain a unique identifier of the terminal device, and the identifier may be used for conflict resolution in Step 4. For example, for the terminal device in *RRC_CONNECTED* state, the unique identifier of the terminal device can be C-RNTI; and for the terminal device in *non-RRC*_*CONNECTED* state, the unique identifier of the terminal device is a unique identifier (such as a system architecture evolution (SAE)-temporary mobile subscriber identity (S-TMSI) or a random number) of the terminal device from a core network.

### Step 4, transmission of Msg4

It may be noted that the network device receives *Msg3* and sends *Msg4* to the terminal device.

In addition, in the conflict resolution mechanism, the network device will carry a flag for uniquely identifying the terminal device in *Msg4* to indicate the winning terminal device, while other terminal devices which are not winning in the conflict resolution will re-initiate random access.

### 2. 2-Step Random Access Procedure

Compared with 4-step random access procedure, 2-step random access procedure helps to reduce the access delay of the terminal device. 2-step random access procedure includes the following two steps.

### Step 1, transmission of message A (i. e. MsgA)

It may be noted that the terminal device sends *MsgA* to the network device, where *MsgA* can include a random access request message, and the random access request message here may be *Msg1* in the 4-step random access procedure.

In addition, *MsgA* may include two parts, that is, a random access preamble and a PUSCH payload.

### Step 2, transmission of message B (i. e. MsgB)

It may be noted that the network device receives *MsgA* and sends *MsgB* to the terminal device, where *MsgB* may include the RAR

### III. Uplink Synchronization Enhancement Method

In combination with the above, uplink synchronization can be achieved through the TAC in the RAR in 4-step random access procedure or 2-step random access procedure, but current uplink synchronization only relates to a communication scenario between one network device or one cell and a terminal device(s). However, as the communication process between the terminal device and the network device becomes increasingly complicated and refined, the 3GPP may discuss a new communication scenario in which the terminal device communicates with one or more network devices within one cell, such as downlink transmission and/or uplink transmission of multiple transmission and reception points (M-TRP)/ multiple downlink control information based M-TRP (M-DCI based M-TRP). In this case, the new communication scenario may involve uplink synchronization.

Of course, the 3GPP may also discuss a new communication scenario in which a terminal device communicates with multiple cells, and the content involved in the uplink synchronization enhancement method of the present disclosure is also adapted to such a new communication scenario, which will not be specifically limited and will be described in detail.

Based on this, in order to enhance uplink synchronization to adapt to a new communication scenario, multiple parameters are considered in the present disclosure. The parameters may be parameters involved in a communication scenario, for example, types of the parameters may include at least one of a transmission configuration indicator (TCI) state, a sounding reference signal (SRS) resource, an SRS resource set, TRP, a control resource set (CORESET) pool identifier (*CORESETPOOLIndex*), or a timing advance group (TAG) identity (ID). A TAC of each of the multiple parameters is determined according to the RAR. Since the TAC of each parameter may indicate TA of each parameter, uplink synchronization enhancement is achieved by the TA of each parameter to adapt to the new communication scenario.

In an embodiment, the TAC of each parameter in the multiple parameters may be determined according to the RAR through the following schemes in the present disclosure. It may be noted that, various schemes in the multiple schemes are not necessarily independent of one another, and may also be combined/combined with one another to obtain a new scheme, and the new scheme also belongs to the protection scope of the present disclosure, which is not specifically limited and is not described herein again.

### Scheme 1:

In the present disclosure, a PDCCH order may trigger a random access procedure. In this way, regardless of 4-step random access procedure or 2-step random access procedure, the PDCCH order will trigger an RAR, and thus in the present disclosure, a TAC of each parameter in the multiple parameters can be determined according to the PDCCH order that triggers the RAR. It can be understood that the network device notifies, through DCI format 1_0, the terminal device to initiate the random access procedure. Then the terminal device sends *Msg1*/*MsgA* to the network device, and finally the network device sends the RAR to the terminal device, so that the PDCCH order triggers the RAR.

In some possible embodiments, the TAC of each parameter in the multiple parameters is determined according to the PDCCH order that triggers the RAR as follows. The TAC of each parameter in the multiple parameters is determined according to the RAR and the PDCCH order that triggers the RAR.

In an embodiment, the TAC of each parameter in multiple parameters is determined according to the PDCCH order that triggers the RAR, or the TAC of each parameter in multiple parameters is determined according to the RAR and the PDCCH order that triggers the RAR through multiple sub-schemes as follows. It may be noted that, various sub-schemes in the multiple sub-schemes are not necessarily independent of one another, and may also be combined/combined with one another to obtain a new sub-scheme, and the new sub-scheme also belongs to the protection scope of the present disclosure, which is not specifically limited and is not described herein again.

### Sub-scheme 1.1:

In the present disclosure, the TAC of each parameter in the multiple parameters can be determined according to an association relationship between PDCCH orders that trigger RARs and parameters. The association relationship between PDCCH orders and parameters may be obtained by network configuration, pre-configuration, or protocol specification.

It can be understood that the association relationship between PDCCH orders and parameters can be introduced in the present disclosure. In this way, in the case that a certain PDCCH order triggers an RAR, by means of the association relationship, the TAC in the RAR can be determined as the TAC of the parameter associated with the PDCCH order.

In some possible embodiments, the TAC of each parameter in the multiple parameters is determined according to the association relationship between PDCCH orders that trigger RARs and parameters as follows. The TAC of each parameter in the multiple parameters is determined according to the RAR and the association relationship between PDCCH orders that trigger RARs and parameters.

### Sub-scheme 1.2:

In the present disclosure, the TAC of each parameter in the multiple parameters may be determined according to a first field in DCI of the PDCCH order that triggers the RAR. The first field may indicate a parameter to which the TAC in the RAR belongs.

It can be understood that, in the present disclosure, the network device can indicate a TAC of which parameter(s) the TAC in the RAR triggered by the PDCCH order is/belong to (i. e. a TAC to which the TAC in the RAR belongs/a TAC to which the TAC in the RAR corresponds/a TAC with which the TAC in the RAR is associated) through a field in the DCI format 1_0 of the PDCCH order.

It may be noted that, the DCI of the PDCCH order in the present disclosure may be understood as the DCI for the PDCCH order.

In addition, in the present disclosure, the first field may indicate a parameter to which the TAC in the RAR belongs, which may be understood that the first field may indicate a parameter to which the TAC in the RAR is directed to, or the first field may indicate a parameter to which the TAC in the RAR corresponds, which is not specifically limited.

In some possible embodiments, the TAC of each parameter in the multiple parameters is determined according to the first field in the DCI of the PDCCH order that triggers the RAR as follows.

The TAC of each parameter in the multiple parameters is determined according to the RAR and the first field in the DCI of the PDCCH order that triggers the RAR.

### Scheme 2:

The present disclosure may introduce an association relationship between TACs in RARs and parameters, so that the TAC of each parameter in multiple parameters is determined according to the association relationship between TACs and parameters. The association relationship between TACs and parameters may be obtained by network configuration, network indication, pre-configuration, or protocol specification.

The technical solutions, beneficial effects, concepts, or the like involved in the embodiments of the present disclosure will be described below.

### 1. Multiple Parameters

### 1). Concept

In embodiments of the present disclosure, the parameters may be parameters involved in a new communication scenario in which multiple network devices in a cell communicate with the terminal device from the perspective of a space domain, a space dimension, a time domain, a frequency domain, or a power domain. One parameter may correspond to/be associated with one network device among multiple network devices, or one parameter may correspond to/be associated with one cell among multiple cells, which is not specifically limited herein.

For example, types of the parameters may include at least one of a TCI state, an SRS resource, an SRS resource set, a TRP, *CORESETPOOLIndex,* a TAG ID, etc.

The parameters may also include other types of parameters involved in the new communication scenario, and any parameter involved in the new communication scenario belongs to the protection scope of the present disclosure, which is not specifically limited and is not described herein again.

In some possible embodiments, each parameter in the multiple parameters may belong to the same type, but each parameter corresponds to a different ID /index/value, so as to be distinguished by using different IDs/indexes/values, or the like.

For example, if a type of each parameter in the multiple parameters is a TRP, it indicates that the multiple parameters include multiple TRPs. Alternatively, if a type of each parameter in the multiple parameters is *CORESETPOOLIndex,* it indicates that the multiple parameters include multiple *CORESETPOOLIndexes.* Alternatively, if a type of each parameter in the multiple parameters is a TAG ID, it indicates that the multiple parameters include multiple TAG IDs, which is not specifically limited.

### 2) TRP

In embodiments of the present disclosure, the network device may configure multiple TRPs for the terminal device.

It may be noted that, the TRP may be characterized by a TCI state, an SRS resource, an SRS resource set, or spatial information, etc.

That is to say, the TCI state, SRS resource, SRS resource set, or space domain information etc. can also be regarded as the concept of the TRP.

In addition, the TRP in the present disclosure may be associated with spatial information or a spatial direction (e. g., a beam or a group of beams). Optionally, the TRP may be characterized by spatial information or a spatial direction (e. g., a beam or a group of beams); or the TRP may be characterized by a power control parameter. In addition, the TRP in the present disclosure may be a functional module, for example, the TRP may be implemented by using a software function, and may also be implemented by hardware. The implementation of the TRP is not specifically limited in the present disclosure.

### 3) TCI State

In embodiments of the present disclosure, the network device may configure multiple TCI states for the terminal device.

It may be noted that, the TCI state may include quasi co-location (QCL) type D (QCL-typeD), where QCL-typeD may contain a spatial receive (RX) parameter, etc. The spatial RX parameter may include at least one of angle of arrival (AOA), average AOA, AOA extension, angle of departure (AOD), average AOD, AOD extension, receive antenna spatial correlation, transmit antenna spatial correlation, transmit beam, receive beam, resource ID, etc.

In some possible embodiments, the TCI state may be a unified TCI state in Release 17 (R17), or may be a unified TCI state in other protocol versions, etc., which is not specifically limited in the present disclosure.

In some possible embodiments, the unified TCI status functionality may include a common TCI status for both downlink and uplink (or joint mechanism for short, and definitely may also be described by other terms, such as a first mechanism, which is not specifically limited thereto), and/or different TCI states for downlink and uplink (or separate mechanism for short, and definitely may also be described by other terms, such as a second mechanism, which is not specifically limited herein).

The joint mechanism may refer to that a TCI state may be applicable to a part or all of downlink channels/signals and a part or all of uplink channels/signals. The separate mechanism may refer to that multiple TCI states are applicable to a part or all of the downlink channels/signals and a part or all of the uplink channels/signals, respectively.

### 4) SRS Resource

In embodiments of the present disclosure, the network device may configure multiple SRS resources for the terminal device.

It may be noted that the SRS resources can be used for channel quality estimation, so that frequency-selective scheduling, beam management, and the like can be performed in the uplink. It can be understood that the multiple SRS resources may belong to different SRS resource sets.

### 5) SRS Resource Set

In embodiments of the present disclosure, the network device may configure multiple SRS resource sets for the terminal device.

It may be noted that each SRS resource set may include one or more SRS resources, where the network device may configure multiple SRS resource sets for the terminal device for various purposes, for example, for uplink and downlink multi-antenna precoding, or for uplink and downlink beam management.

The usage of the SRS resource set is configured or indicated as "codebook" or "non-codebook".

For example, the network device may configure two SRS resource sets each with a usage of "codedbook", or two SRS resource sets each with a usage of "non-codebook".

### 6) CORESETPOOLIndex

In embodiments of the present disclosure, the network device may configure multiple *CORESETPOOLIndexes* for the terminal device through a higher-layer parameter.

It may be noted that the *CORESETPOOLIndex* may be used for grouping a downlink channel/signal and/or an uplink channel/signal, and different values of the *CORESETPOOLIndex* may represent different TRPs.

### 7) TAG ID

In embodiments of the present disclosure, the network device may configure multiple TAG IDs for the terminal device through higher-layer parameters.

It may be noted that, for carrier aggregation (CA) or dual connectivity (DC) configuration, different carriers supported by the terminal device (for example, the carriers supported by the terminal device include a primary carrier and one or more secondary carriers) are allowed to have different TA values, and the concept of timing TAG is introduced. One TAG may include one or more serving cells, which have the same TA. Generally speaking, one master cell group (MCG) or secondary cell group (SCG) may be configured to be associated with up to four TAGs.

Further, in embodiments of the present disclosure, one cell may be configured with multiple TAGs (for example, two TAGs), and different TAGs are distinguished through TAG IDs.

### 2. TAC of Parameter

It may be noted that, one parameter may correspond to/be associated with one network device or one cell in the new communication scenario, and the TA indicated by the TAC can be used for uplink synchronization. In order to achieve uplink synchronization in the new communication scenario, there may be an association (correspondence) relationship between parameters and TACs in the present disclosure, i. e. a TAC of a parameter (the TAC associated with the parameter/the TAC corresponding to the parameter, etc.). The TAC of the parameter may be used for uplink synchronization for the network device or cell associated with the parameter. In this way, in the present disclosure, by determining a TAC of each parameter in multiple parameters, uplink synchronization is achieved in the new communication scenario through the TAC of each parameter, that is, uplink synchronization enhancement is achieved to adapt to the new communication scenario.

It may also be understood that one parameter may be associated with one or more uplink channels and/or uplink signals, and the TA indicated by the TAC may be used for uplink synchronization. Thus, the TAC of the parameter may be used for one or more uplink channels and/or uplink signals associated with the parameter. In this way, in the present disclosure, by determining the TAC of each parameter in the multiple parameters, the TA of one or more associated uplink channels/signals are obtained through the TAC of each of the parameters, so as to achieve uplink synchronization enhancement.

### 3. Parameter-Associated Physical Cell Identifier (PCI)

It may be noted that, the PCI may be used to distinguish signals of different cells or different cells, that is, the PCI may be associated with a cell. Therefore, in the present disclosure, a parameter can be associated with a PCI, so that the parameter is associated with a cell, i. e. signals of different cells or different cells are distinguished through parameters.

### 4. First Parameter, Second Parameter, Etc. among Multiple Parameters

It may be noted that, in the present disclosure, which parameter is the "first parameter" among the multiple parameters, which parameter is the "second parameter" among the multiple parameters may be obtained by network configuration, network indication, protocol specification, and so on.

In an embodiment, an index or an identity of each parameter in the multiple parameters is defined through network configuration, network indication, or a protocol. That is to say, in the present disclosure, different parameters can be distinguished by means of indexes or identities of the parameters.

Therefore, in the present disclosure, a parameter with the smallest index or the smallest ID may be referred to as a "first parameter", a parameter with the second smallest index or the second smallest ID may be referred to as a "second parameter", and so on. Alternatively, in the present disclosure, a parameter with the maximum index or the maximum ID may be referred to as a "first parameter", a parameter with the second maximum ID may be referred to as a "second parameter", and so on, which is not specifically limited herein.

For example, the multiple parameters include multiple TRPs, an index or an ID corresponding to the first TRP is the smallest, and an index or an ID corresponding to the second TRP is the second smallest, and so forth. Hence, no further elaboration is necessary.

### 5. Transmission of RAR

It may be noted that after PRACH transmission, the terminal device shall monitor the PDCCH for scheduling the RAR in the RAR window to obtain the DCI, and then parse the PDSCH payload according to the DCI to receive the RAR. If no RAR is received from the network device within the RAR window, then the random access procedure is considered not successful.

In some possible embodiments, the PDCCH for scheduling the RAR may have the same demodulation reference signal (DM-RS) antenna port QCL properties as the PDCCH order that triggers the RAR.

In this way, the terminal device can know how to receive the PDCCH for scheduling the RAR through the DMRS-RS antenna port QCL properties of the PDCCH order. In addition, by stipulating that the PDCCH for scheduling the RAR and the PDCCH order have the same DM-RS antenna port QCL properties, it is beneficial to avoid beam switching of the terminal device, etc.

It can be understood that, for the RAR triggered by the PDCCH order, the PDCCH for scheduling the RAR may have the same DM-RS antenna port QCL properties with the PDCCH order.

In some possible embodiments, the PDCCH for scheduling the RAR may be received using DM-RS antenna port QCL properties of a CORESET associated with a type1-PDCCH common search space (CSS) set.

It can be understood that the DMRS-RS antenna port QCL properties of the CORESET associated with the type1-PDCCH CSS set can be used to receive the PDCCH for scheduling the RAR.

In this way, the terminal device can know how to receive the PDCCH for scheduling RAR through the DMRS-RS antenna port QCL properties of the CORESET associated with the PDCCH CSS set of type-1. In addition, by receiving the PDCCH for scheduling the RAR through the DMRS-RS antenna port QCL properties of the CORESET associated with the type1-PDCCH CSS set, which helps to obtain a better performance gain.

### 6. How to Determine TAC of Each Parameter in Multiple Parameters According to RAR

In conjunction with the above description, "Scheme 1" and "Scheme 2" will be specifically described below.

### Scheme 1:

### 1) PDCCH Order Triggering RAR

It may be noted that, the random access procedure may be triggered by a PDCCH, may be triggered by a MAC layer, may be triggered by an RRC layer, etc. In order to enhance uplink synchronization so as to adapt to a new communication scenario, in the present disclosure it is considered that a PDCCH order triggers an RAR, and a TAC of each parameter in multiple parameters is determined according to the PDCCH order that triggers the RAR.

In some possible embodiments, the TAC of each parameter in the multiple parameters is determined according to the PDCCH order that triggers the RAR by determining the TAC of each parameter in the multiple parameters according to the RAR and the PDCCH order that triggers the RAR.

In addition, in the disclosure, the TAC of each parameter in the multiple parameters may be determined according to the PDCCH order that triggers the RAR, or the TAC of each parameter in multiple parameters is determined according to the RAR and the PDCCH order that triggers the RAR, according to "Sub-scheme 1.1", "Sub-scheme 1.2", etc. Detailed description will be given below.

### 2) Sub-scheme 1.1

### a. Description

In "Sub-scheme 1.1", in the present disclosure, there is an association relationship between PDCCH orders that trigger RARs and parameters, and the TAC of each parameter in the multiple parameters is determined according to the association relationship between PDCCH orders that trigger RARs and parameters, so that the uplink synchronization is enhanced through the TAC of each parameter, so as to adapt to the communication scenario. The TAC in the RAR can be the TAC of the parameter associated with the PDCCH order.

It may be noted that an association relationship between PDCCH orders and parameters is introduced in the present disclosure, so that in the case that a certain PDCCH order triggers an RAR, the TAC in the RAR can be obtained as the TAC of the parameter associated with the PDCCH order according to the association relationship.

In some possible embodiments, the TAC of each parameter in the multiple parameters is determined according to the association relationship between PDCCH orders that trigger RARs and parameters as follows. The TAC of each parameter in the multiple parameters is determined according to the RAR and the association relationship between PDCCH orders that trigger RARs and parameters.

### b. PDCCH Order Being Associated with One Parameter

It may be noted that the PDCCH order in the present disclosure may be associated with one parameter. For example, parameters associated with different PDCCH orders may be different. In this way, when the RAR is triggered by a certain PDCCH order, the TAC in the RAR can be the TAC of the parameter associated with the PDCCH order. Alternatively, the parameters associated with different PDCCH orders may also be the same.

For example, taking a first PDCCH order as an example, the first PDCCH order is associated with a first parameter (for example, the first parameter is a first TRP). In the case that the first PDCCH order triggers the first RAR, a TAC of the first RAR is/belongs to the TAC of the first parameter.

### c. How to Distinguish Different PDCCH Orders

In some possible embodiments of the present disclosure, different PDCCH orders can be distinguished according to time-frequency locations of the PDCCH orders.

For example, the first PDCCH order is in slot 0, the second PDCCH order is in slot 1, and so on.

In some possible embodiments of the present disclosure, different PDCCH orders can be distinguished according to a COREST or a search space associated with the PDCCH order. The association relationship between PDCCH orders and CORESETs or search spaces can be configured/indicated through a higher-layer parameter/higher-layer signaling.

For example, a first PDCCH order is associated with a first CORESET (for example, the first CORESET is associated with a first TRP) or a first search space, and a second PDCCH order is associated with a second CORESET (for example, the second CORESET is associated with a second TRP) or a second search space.

### d. How to Determine Association Relationship between PDCCH Orders and Parameters

It may be noted that, in embodiments of the present disclosure, the association relationship between PDCCH orders and parameters may be obtained by network configuration/indication, pre-configuration, or protocol specification.

In some possible embodiments, the network configuration may include configuration by higher-layer signaling and/or configuration/indication by DCI of the PDCCH order, or the like.

For example, taking the configuration by higher-layer signaling/indication as an example, in the processes of cell residence, cell search, or downlink synchronization, the network device sends system information/RRC signaling/ medium access control (MAC) control element (CE), etc. to the terminal device to configure/indicate the association relationship.

For another example, taking the configuration/indication by the DCI of the PDCCH order as an example, the network device sends DCI of DCI format 1_0 to the terminal device, and the DCI indicates the terminal device to initiate random access and indicate which parameter the PDCCH order is associated with.

### 3) Sub-scheme 1.2

### a. Description

In "Sub-scheme 1.2", in the present disclosure, the TAC of each parameter in the multiple parameters may be determined according to the first field in the DCI of the PDCCH order that triggers the RAR, so that the uplink synchronization is enhanced through the TAC of each parameter, so as to adapt to the communication scenario. The first field may indicate a parameter to which the TAC in the RAR belongs.

The first field in the present disclosure may indicate a parameter to which the TAC in the RAR belongs, and it may be understood that the first field may indicate a parameter to which the TAC in the RAR is directed, and the first field may indicate a parameter to which the TAC in the RAR corresponds, which is not specifically limited.

It may be noted that, in the present disclosure, which parameter(s) the TAC in the RAR triggered by the PDCCH order is directed to may be indicated through a field in the DCI of the PDCCH order.

For example, the PDCCH order triggers the first RAR, and a field in the DCI of the PDCCH order may indicate that the TAC in the first RAR is/belongs to the TAC of the first parameter (e. g., first TRP or *CORESETPOOLIndex*=0, etc.).

In some possible embodiments, the TAC of each parameter in the multiple parameters is determined according to the first field in the DCI of the PDCCH order that triggers the RAR as follows. The TAC of each parameter in the multiple parameters is determined according to the RAR and the first field in the DCI of the PDCCH order that triggers the RAR.

### b. First Field

In embodiments of the present disclosure, the first field may include at least one of a synchronization signal/physical broadcast channel (SS/PBCH) index field, a random access preamble index field, or another field in the DCI of the PDCCH order. Said another field may be a field except the SS/PBCH index field and the random access preamble index field.

For example, the first field may include an SS/PBCH index field and/or a random access preamble index field in the DCI of the PDCCH order, and thus in the present disclosure to which parameter(s) the TAC in the RAR triggered by the PDCCH order being directed may be indicated in the SS/PBCH index field and/or the random access preamble index field.

For another example, the first field may include said another field. Thus, in the present disclosure which parameter(s) the TAC in the RAR triggered by the PDCCH order is directed may be indicated through said another field.

In some possible embodiments, if the first field includes said another field, the first field may indicate that a PRACH mask index field in the DCI of the PDCCH order is associated with a PCI.

It may be noted that, the PCI may be used to distinguish signals of different cells or different cells, that is, the PCI may be associated with a cell, and the PRACH mask index field may be used to determine a location of a PRACH resource for the random access procedure. In this way, said another field indicates with which PCI the PRACH mask index field is associated, so as to indicate with which cell the location of the PRACH resource for the random access procedure triggered by the PDCCH order is associated, so as to determine to which cell(s) the TAC in the RAR of the random access procedure is directed.

In some possible embodiments, if the first field includes said another field, the first field may be adjacent to the PRACH mask index field in the DCI of the PDCCH order.

In some possible embodiments, if the first field includes said another field, the first field may indicate that the SS/PBCH index field in the DCI of the PDCCH order is associated with the PCI.

It may be noted that, the PCI may be used to distinguish signals or network devices (e. g., TRPs) of different cells or different cells, that is, the PCI may be associated with a cell or a network device (e. g., a TRP), and the SS/PBCH index filed may be used to determine a random access channel (RACH) occasion for the random access procedure. In this way, said another field indicates with which PCI the SS/PBCH index field is associated, so as to indicate with which cell the RACH occasion for the random access procedure triggered by the PDCCH order is associated, so as to determine to which cell(s) the TAC in the RAR of the random access procedure is directed.

In some possible embodiments, if the first field includes said another field, the first field may indicate that the random access preamble index field in the DCI of the PDCCH order is associated with the PCI.

It may be noted that, the PCI may be used to distinguish signals or network devices (such as TRPs) of different cells or different cells, that is, the PCI may be associated with a cell or a network device (such as a TRP), and the random access preamble index field may be used to determine a preamble of the random access procedure. In this way, said another field indicates to which PCI the random access preamble index field is associated with, so as to indicate which cell is associated with the preamble of the random access procedure triggered by the PDCCH order, so as to determine to which cell(s) the TAC in the RAR of the random access procedure is directed.

### c. Whether First Field Is Present in DCI of PDCCH Order

It may be noted that the first field in the present disclosure may or may not exist in the DCI. Therefore, in the present disclosure, whether the first field is present in the DCI of the PDCCH order may be configured/indicated through higher-layer information/higher-layer signaling/a higher-layer parameter, so that whether the first field is present may be flexibly configured/indicated through a network.

For example, whether the first field is present in the DCI of the PDCCH order is indicated through one bit in higher-layer information/higher-layer signaling/a higher-layer parameter. If the value of the one bit is 1, it indicates that the first field is present in the DCI of the PDCCH order; and if the value of the one bit is 0, it indicates that the first field is not present in the DCI of the PDCCH order. Alternatively, if the value of the one bit is 0, it indicates that the first field is present in the DCI of the PDCCH order; and if the value of the one bit is 1, it indicates that the first field is not present in the DCI of the PDCCH order.

### d. Number of Bits of First Field

It may be noted that the number of bits of the first field may be determined according to the number of parameters.

For example, there are two parameters (e. g., a first TRP and a second TRP, or *CORESETPOOLIndex*=0 and *CORESETPOOLIndex=*1), and the first field may have one bit. If the value of the one bit is "0", the first field indicates that the TAC in the RAR triggered by the PDCCH order is/belongs to the TAC of the first parameter (e. g., the first TRP or *CORESETPOOLIndex*=0)*.* If the value of one bit is "1", the first field indicates that the TAC in the RAR triggered by the PDCCH order is/belongs to the TAC of the second parameter (for example, the second TRP or *CORESETPOOLIndex*=1).

For another example there are four parameters, and the first field may have two bits. If the value of the one bit is "00", the first field indicates that the TAC in the RAR triggered by the PDCCH order is the TAC of the first parameter. If the value of the one bit is "01", the first field indicates that the TAC in the RAR triggered by the PDCCH order is the TAC of the second parameter. If the value of the one bit is "10", the first field indicates that the TAC in the RAR triggered by the PDCCH order is the TAC of the third parameter. If the value of the one bit is "11", then the first field indicates that the TAC in the RAR triggered by the PDCCH order is the TAC of the fourth parameter.

### 4) Reference Signal Power of Random Access Procedure Triggered by PDCCH Order

In "scheme 1", the PDCCH order triggers the RAR, and the RAR is used to determine the TAC of each parameter in the multiple parameters.

In some possible embodiments, the reference signal power of the random access procedure triggered by the PDCCH order (or the PRACH transmission triggered by the PDCCH order) may be determined based on the *ss-PBCH-BlockPower* and/or *powerControlOffsetSS* associated with the parameter associated with the PDCCH order.

*ss-PBCH-BlockPower* may represent synchronization signal and physical broadcast channel block power, and *powerControlOffsetSS* may represent a power offset of a non-zero power channel state information reference signal resource element (NZP-CSI-RS RE) and a synchronization signal and physical broadcast channel block (SSB).

It may be noted that, in the present disclosure, the reference signal (such as PRACH or random access preamble) power of the random access procedure triggered by the PDCCH order can be determined according to the *ss-PBCH-BlockPower* and/or *powerControlOffsetSS* associated with the parameter associated with the PDCCH order, so as to ensure the performance of the PRACH transmission triggered by the PDCCH order.

### 5) Random Access Procedure Triggered by PDCCH Order

In embodiments of the present disclosure, the random access procedure triggered by the PDCCH order may be a non-contention based random access procedure or a contention based random access procedure, which is not specifically limited.

### Scheme 2:

In "Scheme 2", an association relationship between TACs in RARs and parameters may be introduced in the present disclosure, so that the TAC in the RAR may be obtained as a TAC of the parameter associated with the TAC according to the association relationship, thereby determining the TAC of each parameter in the multiple parameters according to the association relationship between TACs and parameters.

### 1) TAC in RAR

It may be noted that, the RAR may include one or more TACs, each TAC is associated with one parameter, and different TACs may be associated with the same or different parameters.

For example, the RAR includes two TACs, where a first TAC is associated with a first parameter, and a second TAC is associated with a second parameter; or, the first TAC and the second TAC are associated with the same parameter, which is not specifically limited.

### 2) First TAC, Second TAC, Etc. among Multiple TAC

In some possible embodiments of the present disclosure, which TAC among the multiple TACs in the RAR is a "first TAC" and which TAC among the multiple TACs in the RAR is the "second TAC", and so forth are determined through network configuration/network indication/protocol definition/pre-configuration, or so on.

In an embodiment, an index or an ID of each of the multiple TACs is defined through network configuration/protocol definition. Therefore, in the present disclosure, a TAC with the smallest index or ID may be referred to as "a first TAC", a TAC with the second smallest index or ID may be referred to as "a second TAC", and so on. Alternatively, in the present disclosure, a TAC with the largest index or ID may be referred to as "a first TAC", a TAC with the second largest ID may be referred to as "a second TAC", and so on, which is not specifically limited.

For example, taking two TACs as an example, an index or ID corresponding to the first TAC is the smallest, and an index or ID corresponding to the second TAC is the largest.

In some possible embodiments of the present disclosure, which TAC among the multiple TACs in the RAR is the "first TAC" and which TAC among the multiple TACs in the RAR is the "second TAC" may be determined in a default sequence/sorting manner, and so forth.

For example, each TAC in the multiple TACs has a default sequence/ordering, therefore, in the present disclosure, the first TAC and the second TAC may be determined according to the default sequence/ordering of each TAC in the multiple TACs, and so forth.

The RAR may include one or more TACs, the case that the RAR includes one TAC will be described below as "Sub-scheme 2.1", and the case that the RAR includes multiple TACs will be described below as "Sub-scheme 2.2", respectively.

### 3. Sub-scheme 2.1

① How To Determine Association Relationship Between One TAC In RAR And One Parameter

It may be noted that, the association relationship between one TAC in an RAR and one parameter may be obtained by network configuration/indication, pre-configuration, or protocol specification, so as to determine the association relationship.

That is to say, in the present disclosure, which parameter is associated with one TAC in the RAR may be determined according to network configuration/indication, pre-configuration, or protocol specification, etc.

For example, taking two parameters as an example, the network configures/indicates that one TAC in the RAR is associated with the first parameter (for example, the first TRP or *CORESETPOOLIndex*=0), or the network configures/indicates that the one TAC in the RAR is associated with the second parameter (for example, the second TRP or
*CORESETPOOLIndex*=1).

In some possible embodiments, the network configuration may include configuration/indication by higher-layer signaling, and/or configuration/indication by a field in the RAR.

For example, taking the configuration/indication by the higher-layer signaling as an example, in the processes of cell residence, cell search, downlink synchronization, etc., the network device sends system information/RRC signaling/MAC CE, etc. to the terminal device to configure/indicate which parameter is associated with one TAC in the RAR.

### ② Filed in RAR Configuring/Indicating Association Relationship

It may be noted that, a field in the RAR may indicate which parameter is associated with one TAC in the RAR.

For example, taking the RAR in 4-step random access procedure as an example, a reserved bit (e. g., the first bit) in the first byte of the RAR indicates the association relationship. If two parameters exist, one bit (for example, the first bit) in the reserved bits may indicate the association relation.

If said one bit is "0", it indicates that the TAC in the RAR is associated with the first parameter; and if said one bit is "1", it indicates that the TAC in the RAR is associated with the second parameter. Alternatively, if one bit is "0", it indicates that the TAC in the RAR is associated with the second parameter; and if one bit is "1", it indicates that the TAC in the RAR is associated with the first parameter.

For another example, taking the RAR in the 2-step random access procedure as an example, a reserved bit (for example, the first bit) in the seventh byte of the RAR indicates an association relationship.

For another example, taking an example that the RAR is an absolute TAC MAC CE, a reserved bit (for example, the first bit, and/or the second bit, and/or the third bit, and/or the fourth bit) in the first byte of the absolute TAC MAC CE indicates an association relationship.

### 4. Sub-scheme 2.2

① How To Determine Association Relationship between Multiple TACs In RAR And Parameters

It may be noted that, an association relationship between multiple TACs and parameters may be obtained by network configuration/indication, pre-configuration, or protocol specification, so as to determine the association relationship.

That is to say, in the present disclosure, which parameter is associated with each of the multiple TACs in the RAR is determined according to network configuration/indication, pre-configuration, or protocol specification.

For example, taking two parameters and two TACs being included in the RAR as an example, the network configures/indicates that the first TAC in the RAR is associated with the first parameter (for example, the first TRP or *CORESETPOOLIndex=0),* and the second TAC in the RAR is associated with the second parameter (for example, the second TRP or *CORESETPOOLIndex*=1)*.* Alternately, the network configures/indicates that the first TAC in the RAR is associated with the second parameter (for example, second TRP or *CORESETPOOLIndex*=1), and the second TAC in the RAR is associated with the first parameter (for example, first TRP or *CORESETPOOLIndex=0).*

In some possible embodiments, the network configuration may include configuration/indication by higher-layer signaling and/or configuration/indication by a field in the RAR.

For example, taking the configuration/indication by the higher-layer signaling as an example, in the processes of cell residence, cell search, downlink synchronization, etc., the network device sends system information/RRC signaling/MAC CE, etc. to the terminal device to configure/indicate which parameter each TAC in the RAR is associated with.

### ②Filed in RAR Configuring/Indicating Association Relationship

It may be noted that field in the RAR may indicate which parameter each TAC in the RAR is associated with.

For example, taking the RAR in 4-step random access procedure as an example, a reserved bit (e. g., the first bit) in the first byte of the RAR indicates the association relationship. If two parameters exist and the RAR includes two TAC, one bit (for example, the first bit) in the reserved bits may indicate the association relation.

If said one bit is "0", it indicates that the first TAC is associated with the first parameter and the second TAC is associated with the second parameter; and if said one bit is "1", it indicates that the first TAC is associated with the second parameter and that the second TAC is associated with the first parameter. Alternatively, if said one bit is "0", it indicates that the first TAC is associated with the second parameter and that the second TAC is associated with the first parameter; and if said one bit is "1", it indicates that that the first TAC is associated with the first parameter and the second TAC is associated with the second parameter.

For another example, taking the RAR in 2-step random access procedure as an example, a reserved bit (for example, the first bit) in the seventh byte of the RAR indicates an association relationship.

For another example, taking an example that the RAR is an absolute TAC MAC CE, a reserved bit (for example, the first bit, and/or the second bit, and/or the third bit, and/or the fourth bit) in the first byte of the absolute TAC MAC CE indicates an association relationship.

### 7. Exemplary Description of Method for Determining TAC

In conjunction with the described contents, a method for determining a timing advance command according to embodiments of the present disclosure is introduced as an example. It may be noted that the network device may be a chip, a chip module, or a communication module, and the terminal device may be a chip, a chip module, or a communication module. That is to say, the method may be applied to a network device or a terminal device, which is not specifically limited.

FIG. 2 is a schematic flowchart of a method for determining a timing advance command according to an embodiment of the present disclosure. The method includes the following.

At S210, the network device sends an RAR, where the RAR is used to determine a TAC of each parameter in multiple parameters.

Type of the multiple parameter may include at least one of a TCI status, an SRS resource, an SRS resource set, a TRP, *CORESETPOOLIndex,* or a TAG ID.

Correspondingly, the terminal device receives the RAR.

At S220, the terminal device determines the TAC of each parameter in the multiple parameters according to the RAR.

It may be noted that, "RAR", for "multiple parameters", "how to determine TAC of each parameter in multiple parameters", "TCI state", "SRS resource", "SRS resource set", and "TRP", etc., reference can be made to the above contents for details, which will not be repeated here.

It can be seen that, in order to enhance uplink synchronization so as to adapt to a new communication scenario, multiple parameters are taken into consideration in the present disclosure, where the multiple parameters may be parameters involved in the new communication scenario. The TAC of each parameter in the multiple parameters is determined according to an RAR. Since the TAC of each parameter may indicate TA of each parameter, uplink synchronization enhancement is achieved by TA of each parameter to adapt to the new communication scenario.

In some possible embodiments, the determining of the TAC of each parameter in the multiple parameters according to the RAR at S220 may include determining the TAC of each parameter in the multiple parameters according to a PDCCH order that triggers the RAR.

It may be noted that, in combination with "Scheme 1", the PDCCH order may trigger the RAR in the present disclosure, and the TAC of each parameter is determined according to the PDCCH order, so as to achieve uplink synchronization enhancement.

In some possible embodiments, the TAC of each parameter in the multiple parameters is determined according to an association relationship between PDCCH orders that trigger RARs and parameters as follows. The TAC of each parameter in the multiple parameters is determined according to the RAR and the association relationship between PDCCH orders that trigger RARs and parameters.

In some possible embodiments, PDCCH orders have an association relationship with parameters, and the association relationship used to determine the TAC of each parameter in the multiple parameters.

It may be noted that, in conjunction with "Sub-scheme 1.1", PDCCH orders have an association relationship with parameters in the disclosure. In this way, in the case that a certain PDCCH order triggers an RAR, the TAC in the RAR can be obtained as a TAC of a parameter associated with the PDCCH order according to the association relationship.

In some possible embodiments, the TAC of each parameter in the plurality of parameters is determined according to the PDCCH order that triggers the RAR as follows. The TAC of each parameter in the plurality of parameters is determined according to an association relationship between PDCCH orders that trigger RARs and parameters.

It may be noted that, in conjunction with "Sub-scheme 1.1" above, PDCCH orders have an association relationship with parameters in the disclosure. In this way, in the case that a certain PDCCH order triggers an RAR, the TAC in the RAR can be obtained as a TAC of a parameter associated with the PDCCH order according to the association relationship.

In some possible embodiments, the TAC of each parameter in the multiple parameters is determined according to an association relationship between PDCCH orders that trigger RARs and parameters as follows. The TAC of each parameter in the multiple parameters is determined according to the RAR and the association relationship between PDCCH orders that trigger RARs and parameters.

In some possible embodiments, the PDCCH order is associated with one parameter. A TAC in the RAR is a TAC of the parameter associated with the PDCCH order.

It may be noted that, in conjunction with "Sub-scheme 1.1", in the present disclosure, a parameter may be associated with a PDCCH order, so that the TAC in the RAR may be determined as the TAC of the parameter associated with the PDCCH order through the association relationship.

In some possible embodiments, the association relationship is obtained by network configuration/indication, pre-configuration, or protocol specification.

It may be noted that, in combination with "Sub-scheme 1.1", in the present disclosure, the association relationship between PDCCH orders and parameters can be determined by means of network configuration/indication, pre-configuration, or protocol specification, etc.

In some possible embodiments, the network configuration includes configuration by higher-layer signaling and/or configuration by DCI of the PDCCH order.

It may be noted that, in combination with "Sub-scheme 1.1", in the present disclosure the association relationship between PDCCH orders and parameters can be determined by configuration by higher-layer signaling and/or configuration by DCI of the PDCCH order, etc.

In some possible embodiments, the TAC of each parameter in the plurality of parameters is determined according to the PDCCH order that triggers the RAR as follows. The TAC of each parameter in the plurality of parameters is determined according to a first field in DCI of the PDCCH order that triggers the RAR.

It may be noted that, in combination with "Sub-scheme 1.2", in the present disclosure, the network device may indicate a TAC of which parameter(s) the TAC in the RAR triggered by the PDCCH order is/belongs to through a field in the DCI format 1_0 of the PDCCH order, so as to achieve uplink synchronization enhancement.

In some possible embodiments, the TAC of each parameter in the multiple parameters is determined according to the first field in the DCI of the PDCCH order that triggers the RAR as follows. The TAC of each parameter in the multiple parameters is determined according to the RAR and the first field in the DCI of the PDCCH order that triggers the RAR.

In some possible embodiments, the first field may indicate a parameter to which the TAC in the RAR belongs.

It may be noted that, in combination with "Sub-scheme 1.2", in the present disclosure, a TAC of which parameter(s) the TAC in the RAR triggered by the PDCCH order is/belongs to is indicated through the first field in the DCI format 1_0 of the PDCCH order, so as to achieve uplink synchronization enhancement.

In some possible embodiments, the first field may include at least one of a synchronization signal/physical broadcast channel (SS/PBCH) index field, a random access preamble index field, or another field in the DCI of the PDCCH order.

It may be noted that, in combination with "Sub-scheme 1.2", a TAC of which parameter(s) the TAC in the RAR triggered by the PDCCH order is/belongs to is flexibly indicated through at least one of the SS/PBCH Index field, the random access preamble index field, or another field.

In some possible embodiments, if the first field includes said another field, the first filed may indicate that the SS/PBCH index field in the DCI of the PDCCH order is associated with a PCI.

It may be noted that, in combination with "Sub-scheme 1.2", in the present disclosure said another field may indicate that the SS/PBCH index field in the DCI of the PDCCH order is associated with the PCI, so as to indicate with which cell the location of the PRACH resource for the random access procedure triggered by the PDCCH order is associated, so as to determine to which cell(s) the TAC in the RAR of the random access procedure is directed.

In some possible embodiments, if the first field includes said another field, the first field may be adjacent to the PRACH mask index field in the DCI of the PDCCH order.

It may be noted that, in combination with "Sub-scheme 1.2", said another field may be set in the DCI of the PDCCH order to be adjacent to the PRACH mask index field.

In some possible embodiments, whether the first field is present in the DCI of the PDCCH order is configured by higher-layer information.

It may be noted that, in combination with "Sub-scheme 1.2", the first field in the present disclosure may or may not be present in the DCI. Therefore, in the present disclosure, whether the first field is present in the DCI of the PDCCH order may be configured/indicated through higher-layer information/higher-layer signaling/higher-layer parameters, so that whether the first field is present may be flexibly configured/indicated through a network.

In some possible embodiments, the TAC in the RAR may have an association relationship with a parameter, and the association relationship may be used to determine the TAC of each parameter in the multiple parameters.

It may be noted that, in combination with "scheme 2", in the present disclosure, the TAC in the RAR has an association relationship with the parameter. In this way, the TAC in the RAR can be obtained as the TAC of the parameter associated with the TAC through the association relationship.

In some possible embodiments, the determining of the TAC of each parameter in the multiple parameters according to the RAR at S220 may include the following. The TAC of each parameter in the plurality of parameters is determined according to an association relationship between TACs in triggered RARs and parameters.

It may be noted that, in combination with "scheme 2", in the present disclosure, the TAC in the RAR has an association relationship with the parameter. In this way, the TAC in the RAR can be obtained as the TAC of the parameter associated with the TAC in the RAR, so that the TAC of each parameter in the multiple parameters can be determined according to the association relationship between TACs and parameters.

In some possible embodiments, the RAR may include one or more TACs, each of the one or more TACs may be associated with one of the multiple parameter.

It may be noted that, in combination with "scheme 2", each TAC in the RAR is associated with one parameter, so that the TAC in the RAR can be obtained as the TAC of the parameter associated with the TAC in the RAR through the association relationship.

In some possible embodiments, the association relationship may be obtained by the network configuration/indication, pre-configuration, or protocol specification.

It may be noted that, in combination with "scheme 2", in the present disclosure, the association relationship between TACs in RARs and parameters may be obtained by network configuration/indication, pre-configuration, or protocol specification.

In some possible embodiments, the network configuration may include configuration by high layer signaling and/or configuration/indication by a field in the RAR.

It may be noted that, in combination with "scheme 2", in the present disclosure, the association relationship between TACs in RARs and parameters may be obtained by network configuration/indication, pre-configuration, or protocol specification.

In some possible embodiments, the RAR may be triggered by the PDCCH order.

It may be noted that, in conjunction with the above description, the RAR can be triggered by the PDCCH order in the present disclosure.

In some possible embodiments, a reference signal power of a random access procedure triggered by the PDCCH order is determined according to *ss-PBCH-BlockPower*, and/or (SSB) *powerControlOffsetSS* associated with a parameter associated with the PDCCH order.

It may be noted that, in combination with "4) Reference signal power of random access procedure triggered by PDCCH order", in the present disclosure, the reference signal power of a random access procedure triggered by the PDCCH order is determined according to *ss-PBCH-BlockPower*, and/or (SSB) *powerControlOffsetSS* associated with a parameter associated with the PDCCH order, so as to ensure the performance of the PRACH transmission triggered by the PDCCH Order.

In some possible embodiments, the PDCCH order may have the same DM-RS antenna port QCL properties as the PDCCH for scheduling the RAR.

It may be noted that, in conjunction with "5. transmission of RAR", in the present disclosure, the terminal device can learn how to receive a PDCCH for scheduling the RAR according to the DM-RS antenna port QCL properties of the PDCCH order. In addition, by stipulating that the PDCCH for scheduling the RAR and the PDCCH order have the same DM-RS antenna port QCL properties, it can be beneficial to avoid the beam switching of the terminal device, etc.

In some possible embodiments, the random access procedure triggered by the PDCCH order is a non-contention based random access procedure or a contention based random access procedure.

In this way, a non-contention based random access procedure or a contention based random access procedure can be implemented in the present disclosure.

In some possible embodiments, the PDCCH for scheduling the RAR may be received by the DM-RS antenna port QCL properties of the CORESET associated with type1-PDCCH common search space (CSS) set.

It may be noted that, in conjunction with "5. transmission of RAR", in the present disclosure, the terminal device can learn how to receive PDCCH for scheduling the RAR through the DMRS-RS antenna port QCL properties of the CORESET associated with the type1-PDCCH CSS set. In addition, by receiving the PDCCH for scheduling the RAR through the DMRS-RS antenna port QCL properties of the CORESET associated with the type1-PDCCH CSS set, it may be advantageous to obtain a better performance gain.

In some possible embodiments, each parameter in the plurality of parameters is associated with a PCI.

It may be noted that, in combination with the content in the foregoing "3. parameter-associated physical cell identifier (PCI)", the PCI may be used to distinguish signals of different cells or different cells, that is, the PCI may be associated with a cell. Therefore, in the present disclosure, a parameter can be associated with a PCI, so that the parameter is associated with a cell, i. e. signals of different cells or different cells are distinguished through parameters.

### 8. Exemplary description of a method for determining a reference signal power

With reference to the foregoing content, a method for determining a reference signal power according to an embodiment of the present disclosure is introduced exemplarily. It may be noted that an execution subject of the method may be a network device or a terminal device, where the network device may be a chip, a chip module, a communications module, or the like, and the terminal device may be a chip, a chip module, a communications module, or the like. That is to say, the method may be applied to a network device or a terminal device, which is not specifically limited.

FIG. 3 is a schematic flowchart of a method for determining a reference signal power according to an embodiment of the present disclosure. The method may specifically include the following.

At S310, a reference signal power of a random access procedure triggered by a PDCCH order is determined according to a synchronization signal and physical broadcast channel block (SSB) power *ss-PBCH-BlockPower* and/or a power offset of a non-zero power channel state information reference signal resource element (NZP-CSI-RS RE) and a synchronization signal and physical broadcast channel block (SSB) *powerControlOffsetSS*, that is associated with a parameter associated with the PDCCH order.

The PDCCH order has an association relationship with a parameter.

Types of multiple parameters may include at least one of a TCI status, an SRS resource, an SRS resource set, a TRP, *CORESETPOOLIndex,* and a TAG ID.

It may be noted that, for "PDCCH order", "parameter", "association relationship between PDCCH orders and parameters", etc., reference may be made to the above contents for details, which will not be repeated herein.

It can be seen that in the present disclosure, an association relationship between PDCCH orders and parameters is taken into considered, and the reference signal (PRACH or a random access preamble) power of the random access procedure triggered by the PDCCH order is determined according to *ss-PBCH-BlockPower* and/or a *powerControlOffsetSS*, that is associated with a parameter associated with the PDCCH order, In this way, the performance of the PRACH transmission triggered by the PDCCH order is ensured, and the uplink synchronization enhancement is achieved through the reference signal power of the random access procedure triggered by the PDCCH order to adapt to a new communication scenario.

In some possible embodiments, the PDCCH order may trigger a RAR, and the RAR may be used to determine the TAC of each parameter in the plurality of parameters.

In some possible embodiments, the PDCCH order may have the same DM-RS antenna port QCL properties as the PDCCH for scheduling the RAR.

In some possible embodiments, the PDCCH order may be associated with one parameter, and a TAC in the RAR triggered by the PDCCH order may be a TAC of the parameter associated with the PDCCH order.

In some possible embodiments, the association relationship between PDCCH orders and parameters may be obtained by the network configuration/indication, pre-configuration, or protocol specification.

In some possible embodiments, the network configuration may include configuration by higher layer signaling and/or configuration by DCI of the PDCCH order.

In some possible embodiments, a first field in the DCI of the PDCCH order may be used to determine the TAC of each parameter in the plurality of parameters.

In some possible embodiments, the first field may indicate a parameter to which the TAC in the RAR triggered by the PDCCH order belongs.

In some possible embodiments, the first field may include at least one of an SS/PBCH index field, a random access preamble index field, another field in the DCI of the PDCCH order.

In some possible embodiments, if the first field includes said another field, the first filed may indicate that the SS/PBCH index field in the DCI of the PDCCH order is associated with a PCI.

In some possible embodiments, if the first field includes said another field, the first field is adjacent to a PRACH mask index field in the DCI of the PDCCH order.

In some possible embodiments, whether the first field is present in the DCI of the PDCCH order is configured by higher layer information.

In some possible embodiments, a TAC in a PDCCH-triggered RAR may have an association relationship with a parameter.

In some possible embodiments, the PDCCH-triggered RAR may include one or more TACs, each of the one or more TACs is associated with one of the multiple parameters.

In some possible embodiments, the association between TACs in PDCCH-triggered RARs and parameters may be obtained by the network configuration/indication, pre-configuration, or protocol specification.

In some possible embodiments, the network configuration may include configuration/indication by higher layer signaling and/or configuration by a field in the RAR.

In some possible embodiments, a random access procedure triggered by the PDCCH order is a non-contention based random access procedure or a contention based random access procedure.

In some possible embodiments, each parameter in the plurality of parameters is associated with a PCI.

### IV. Exemplary Description of Apparatus for Determining TAC

The foregoing solutions of embodiments of the disclosure are mainly described from the viewpoint of the method side. It can be understood that, in order to implement the above functions, the terminal device or the network device includes hardware structures and/or software modules for performing the respective functions. Those skilled in the art may readily recognize that, in combination with the units and algorithmic operations of various examples described in the embodiments disclosed herein, the disclosure can be implemented in hardware or a combination of the hardware and computer software. Whether a function is implemented by way of the hardware or hardware driven by the computer software depends on the particular application and design constraints of the technical solution. Those skilled in the art may use different methods to implement the described functions for each particular application, but such implementation may not be considered as beyond the scope of the disclosure.

According to embodiments of the disclosure, functional units may be divided for the terminal or the network device in accordance with the foregoing method examples. For example, each functional unit may be divided according to each function, and two or more functions may be integrated in one processing unit. The above-mentioned integrated unit can be implemented in the form of hardware or software program modules. It should be noted that the division of units in embodiments of the disclosure is schematic, and is merely a logical function division, and there may be other division manners in actual implementation.

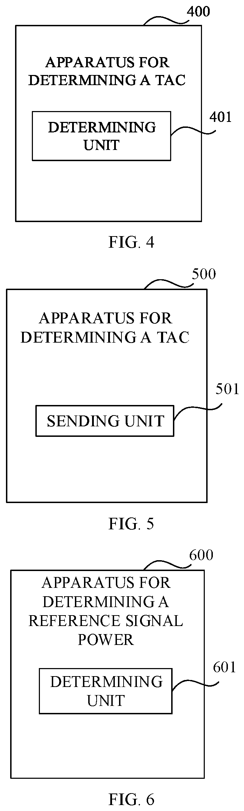

In the case of the integrated unit, FIG. 4 is a block diagram illustrating functional units of an apparatus for determining a TAC according to an embodiment of the disclosure. The apparatus 400 for determining a TAC includes a determining unit 401.

It may be noted that the determining unit 401 may be a module unit configured to deal with a signal, data, information, etc., which is not specifically limited herein.

The apparatus 400 for determining a TAC may further include a storage unit. The storage unit is configured to store computer program codes or instructions executed by the apparatus 400 for determining a TAC. The storage unit may be a memory.

In addition, it may be noted that the apparatus 400 for determining a TAC may be a chip or a chip module.

The determining unit 401 may be integrated into another unit. For example, the determining unit 401 may be integrated into a communication unit. For example, the determining unit 401 may be integrated into a processing unit.

The communication unit may be a communication interface, a transceiver, a transceiver circuit, etc.

The processing unit may be a processor or a controller, for example, a baseband processor, a baseband chip, a central processing unit (CPU), a general-purpose processor, a digital signal processor (DSP), an application-specific integrated circuit (ASIC), a field programmable gate array (FPGA), or other programmable logic devices, transistor logic devices, hardware components, or a combination thereof. Various exemplary logic blocks, modules, and circuits disclosed in the disclosure can be implemented or executed by the processing unit. The processing unit may also be a combination for implementing computing functions, for example, one or more microprocessors, a combination of DSP and microprocessor, or the like.

In specific implementation, the determining unit 401 is configured to perform any one operation performed by a terminal device/ chip/ module in the above method embodiments, for example, sending data or receiving data. The following provides detailed description.

In specific implementation, the determining unit 401 is configured to perform any one operation in the above method embodiments, and selectively invoke another unit to complete corresponding operations when performing data transmission such as sending. The following provides detailed description.

The determining until is configured to determine a TAC of each parameter in a plurality of parameters according to an RAR, where types of the plurality of parameters include at least one of a TCI state, an SRS resource, an SRS resource set, a TRP, a CORESET pool identifier, or a TAG identity.

It can be seen that, in order to enhance uplink synchronization so as to adapt to a new communication scenario, multiple parameters are considered in the present disclosure, where the parameters may be parameters involved in the new communication scenario. A TAC of each parameter in the multiple parameters is determined according to an RAR. Since the TAC of each parameter may a TA of each parameter, the enhancement of uplink synchronization is achieved by the TA of each parameter to adapt to the new communication scenario.

It may be noted that for specific implementation of each operation in the embodiments illustrated in FIG. 4, reference can be made to the description of the method embodiments above, which is not repeated herein.

In some possible embodiments, in terms of determining the TAC of each parameter in the plurality of parameters according to the RAR, the determining unit 401 is configured to determine the TAC of each parameter in the plurality of parameters according to a physical downlink control channel (PDCCH) order that triggers the RAR.

It may be noted that, in combination with "Scheme 1", the PDCCH order may trigger the RAR in the present disclosure, and the TAC of each parameter is determined according to the PDCCH order, so as to achieve uplink synchronization enhancement.

In some possible embodiments, in terms of determining the TAC of each parameter in the plurality of parameters according to the PDCCH order that triggers the RAR, the determining unit is configured to determine the TAC of each parameter in the plurality of parameters according to an association relationship between PDCCH orders that trigger RARs and parameters.

It may be noted that, in conjunction with "Sub-scheme 1.1", PDCCH orders have an association relationship with parameters in the disclosure. In this way, in the case that a certain PDCCH order triggers an RAR, the TAC in the RAR can be obtained as a TAC of a parameter associated with the PDCCH order according to the association relationship.

In some possible embodiments, the PDCCH order is associated with one parameter, and a TAC in the RAR is a TAC of a parameter associated with the PDCCH order.

It may be noted that, in conjunction with "Sub-scheme 1.1", in the present disclosure, a parameter may be associated with a PDCCH order, so that the TAC in the RAR may be determined as the TAC of the parameter associated with the PDCCH order through the association relationship.

In some possible embodiments, the association relationship is obtained by network configuration, pre-configuration, or protocol specification.

It may be noted that, in combination with "Sub-scheme 1.1", in the present disclosure, the association relationship between PDCCH orders and parameters can be determined by means of network configuration/indication, pre-configuration, or protocol specification, etc.

In some possible embodiments, the network configuration includes configuration by higher-layer signaling and/or configuration by downlink control information (DCI) of the PDCCH order.

It may be noted that, in combination with "Sub-scheme 1.1", in the present disclosure the association relationship between PDCCH orders and parameters can be determined by configuration by higher-layer signaling and/or configuration by DCI of the PDCCH order, etc.

In some possible embodiments, in terms of determining the TAC of each parameter in the plurality of parameters according to the PDCCH order that triggers the RAR, the determining unit 401 is configured to determine the TAC of each parameter in the plurality of parameters according to a first field in DCI of the PDCCH order that triggers the RAR.

It may be noted that, in combination with "Sub-scheme 1.2", in the present disclosure, the network device may indicate a TAC of which parameter(s) the TAC in the RAR triggered by the PDCCH order is/belongs to through a field in the DCI format 1_0 of the PDCCH order, so as to achieve uplink synchronization enhancement.

In some possible embodiments, the first field indicates a parameter to which a TAC in the RAR belongs.

It may be noted that, in combination with "Sub-scheme 1.2", in the present disclosure, a TAC of which parameter(s) the TAC in the RAR triggered by the PDCCH order is/belongs to is indicated through the first field in the DCI format 1_0 of the PDCCH order, so as to achieve uplink synchronization enhancement.

In some possible embodiments, the first field includes at least one of a synchronization signal/physical broadcast channel (SS/PBCH) index field, a random access preamble index field, or another field in the DCI.

It may be noted that, in combination with "Sub-scheme 1.2", a TAC of which parameter(s) the TAC in the RAR triggered by the PDCCH order is/belongs to is flexibly indicated through at least one of the SS/PBCH Index field, the random access preamble index field, or another field.

In some possible embodiments, in response to the first field including another field, the first field indicates that an SS/PBCH index field in the DCI is associated with a PCI.

It may be noted that, in combination with "Sub-scheme 1.2", in the present disclosure said another field may indicate that the SS/PBCH index field in the DCI of the PDCCH order is associated with the PCI, so as to indicate with which cell the location of the PRACH resource for the random access procedure triggered by the PDCCH order is associated, so as to determine to which cell(s) the TAC in the RAR of the random access procedure is directed.

In some possible embodiments, in response to the first field including another field, the first field is adjacent to a physical random access channel (PRACH) mask index field in the DCI.

It may be noted that, in combination with "Sub-scheme 1.2", said another field may be set in the DCI of the PDCCH order to be adjacent to the PRACH mask index field.

In some possible embodiments, whether the first field is present in the DCI is configured through higher-layer information.

It may be noted that, in combination with "Sub-scheme 1.2", the first field in the present disclosure may or may not be present in the DCI. Therefore, in the present disclosure, whether the first field is present in the DCI of the PDCCH order may be configured/indicated through higher-layer information/higher-layer signaling/higher-layer parameters, so that whether the first field is present may be flexibly configured/indicated through a network.

In some possible embodiments, in terms of determining the TAC of each parameter in the plurality of parameters according to the RAR, the determining unit 401 is configured to determine the TAC of each parameter in the plurality of parameters according to an association relationship between TACs in triggered RARs and parameters.

It may be noted that, in combination with "scheme 2", in the present disclosure, the TAC in the RAR has an association relationship with the parameter. In this way, the TAC in the RAR can be obtained as the TAC of the parameter associated with the TAC in the RAR, so that the TAC of each parameter in the multiple parameters can be determined according to the association relationship between TACs and parameters.

In some possible embodiments, the RAR includes one or more TACs, and each TAC is associated with one of the plurality of parameters.

It may be noted that, in combination with "scheme 2", each TAC in the RAR is associated with one parameter, so that the TAC in the RAR can be obtained as the TAC of the parameter associated with the TAC in the RAR through the association relationship.

In some possible embodiments, the association relationship is obtained by network configuration, pre-configuration, or protocol specification.

It may be noted that, in combination with "scheme 2", in the present disclosure, the association relationship between TACs in RARs and parameters may be obtained by network configuration/indication, pre-configuration, or protocol specification.

In some possible embodiments, the network configuration includes configuration by higher-layer signaling and/or configuration by a field in the RAR.

It may be noted that, in combination with "scheme 2", in the present disclosure, the association relationship between TACs in RARs and parameters may be obtained by network configuration/indication, pre-configuration, or protocol specification.

In some possible embodiments, the RAR is triggered by the PDCCH order.

It may be noted that, in conjunction with the above description, the RAR can be triggered by the PDCCH order in the present disclosure.

In some possible embodiments, a reference signal power of a random access procedure triggered by the PDCCH order is determined according to *ss-PBCH-BlockPower*, and/or (SSB) *powerControlOffsetSS* associated with a parameter associated with the PDCCH order.

It may be noted that, in combination with "4) Reference signal power of random access procedure triggered by PDCCH order", in the present disclosure, the reference signal power of a random access procedure triggered by the PDCCH order is determined according to *ss-PBCH-BlockPower*, and/or (SSB) *powerControlOffsetSS* associated with a parameter associated with the PDCCH order, so as to ensure the performance of the PRACH transmission triggered by the PDCCH Order.

In some possible embodiments, the PDCCH order has same demodulation reference signal (DM-RS) antenna port quasi co-location (QCL) properties as a PDCCH for scheduling the RAR.

It may be noted that, in conjunction with "5. transmission of RAR", in the present disclosure, the terminal device can learn how to receive a PDCCH for scheduling the RAR according to the DM-RS antenna port QCL properties of the PDCCH order. In addition, by stipulating that the PDCCH for scheduling the RAR and the PDCCH order have the same DM-RS antenna port QCL properties, it can be beneficial to avoid the beam switching of the terminal device, etc.

In some possible embodiments, a random access procedure triggered by the PDCCH order is a non-contention based random access procedure or a contention based random access procedure.

In this way, a non-contention based random access procedure or a contention based random access procedure can be implemented in the present disclosure.

In some possible embodiments, a PDCCH for scheduling the RAR is received by using DMRS-RS antenna port QCL properties of a CORESET associated with type1-PDCCH common search space (CSS) set.

It may be noted that, in conjunction with "5. transmission of RAR", in the present disclosure, the terminal device can learn how to receive PDCCH for scheduling the RAR through the DMRS-RS antenna port QCL properties of the CORESET associated with the type1-PDCCH CSS set. In addition, by receiving the PDCCH for scheduling the RAR through the DMRS-RS antenna port QCL properties of the CORESET associated with the type1-PDCCH CSS set, it may be advantageous to obtain a better performance gain.

In some possible embodiments, each parameter in the plurality of parameters is associated with a PCI.

It may be noted that, in combination with the content in the foregoing "3. parameter-associated physical cell identifier (PCI)", the PCI may be used to distinguish signals of different cells or different cells, that is, the PCI may be associated with a cell. Therefore, in the present disclosure, a parameter can be associated with a PCI, so that the parameter is associated with a cell, i. e. signals of different cells or different cells are distinguished through parameters.

### V. Exemplary description of an apparatus for determining a TAC

In the case of the integrated unit, FIG. 5 is a block diagram illustrating functional units of an apparatus for determining a TAC according to an embodiment of the disclosure. The apparatus 500 for determining a TAC includes a sending unit 501.

It may be noted that the sending unit 501 may be a module unit configured to deal with a signal, data, information, etc., which is not specifically limited herein.

The apparatus 500 for determining a TAC may further include a storage unit. The storage unit is configured to store computer program codes or instructions executed by the apparatus 500 for determining a TAC. The storage unit may be a memory.

In addition, it may be noted that the apparatus 500 for determining a TAC may be a chip or a chip module.

The sending unit 501 may be integrated into another unit. For example, the sending unit 501 may be integrated into a communication unit.

The communication unit may be a communication interface, a transceiver, a transceiver circuit, etc.

For example, the sending unit 501 may be integrated into a processing unit.

The processing unit may be a processor or a controller, for example, a baseband processor, a baseband chip, a central processing unit (CPU), a general-purpose processor, a digital signal processor (DSP), an application-specific integrated circuit (ASIC), a field programmable gate array (FPGA), or other programmable logic devices, transistor logic devices, hardware components, or a combination thereof. Various exemplary logic blocks, modules, and circuits disclosed in the disclosure can be implemented or executed by the processing unit. The processing unit may also be a combination for implementing computing functions, for example, one or more microprocessors, a combination of DSP and microprocessor, or the like.

In specific implementation, the sending unit 501 is configured to perform any one operation performed by a terminal device/ chip/ module in the above method embodiments, for example, sending data or receiving data. The following provides detailed description.

In specific implementation, the sending unit 501 is configured to perform any one operation in the above method embodiments, and selectively invoke another unit to complete corresponding operations when performing data transmission such as sending. The following provides detailed description.

The sending unit 501 is configured to send an RAR, the RAR being used to determine a TAC of each parameter in a plurality of parameters, where types of the plurality of parameters include at least one of a TCI state, a SRS resource, an SRS resource set, a TRP, a CORESET pool identifier, or a TAG identity.

It can be seen that, in order to enhance uplink synchronization so as to adapt to a new communication scenario, multiple parameters are considered in the present disclosure, where the parameters may be parameters involved in the new communication scenario. A TAC of each parameter in the multiple parameters is determined according to an RAR. Since the TAC of each parameter may a TA of each parameter, the enhancement of uplink synchronization is achieved by the TA of each parameter to adapt to the new communication scenario.

It may be noted that for specific implementation of each operation in the embodiments illustrated in FIG. 5, reference can be made to the description of the method embodiments above, which is not repeated herein.

In some possible embodiments, the random access response is triggered by a physical downlink control channel (PDCCH) order.

In some possible embodiments, the PDCCH order has an association relationship with a parameter, and the association relationship is used to determine the TAC of each parameter in the plurality of parameters.

In some possible embodiments, the PDCCH order is associated with one of the plurality of parameters; and a TAC in the RAR is a TAC of the parameter associated with the PDCCH order.

In some possible embodiments, the association relationship is obtained by network configuration, pre-configuration, or protocol specification.

In some possible embodiments, the network configuration includes configuration by higher-layer signaling and/or configuration by downlink control information (DCI) of the PDCCH order.

In some possible embodiments, a first field in DCI of the PDCCH order is used to determine the TAC of each parameter in the plurality of parameters.

In some possible embodiments, the first field indicates a parameter to which a TAC in the RAR belongs.

In some possible embodiments, the first field includes at least one of a synchronization signal/physical broadcast channel (SS/PBCH) index field, a random access preamble index field, or another field in the DCI.

In some possible embodiments, in response to the first field including another field, the first field indicates that an SS/PBCH index field in the DCI is associated with a PCI.

In some possible embodiments, in response to the first field including another field, the first field is adjacent to a physical random access channel (PRACH) mask index field in the DCI.

In some possible embodiments, whether the first field is present in the DCI is configured through higher-layer information.

In some possible embodiments, a TAC in the RAR has an association relationship with a parameter, and the association relationship is used to determine the TAC of each parameter in the plurality of parameters.

In some possible embodiments, the RAR includes one or more TACs, and each TAC is associated with one parameter.

In some possible embodiments, the association relationship is obtained by network configuration, pre-configuration, or protocol specification.

In some possible embodiments, the network configuration includes configuration by higher-layer signaling and/or configuration by a field in the RAR.

In some possible embodiments, a reference signal power of a random access procedure triggered by the PDCCH order is determined according to *ss-PBCH-BlockPower* and/or *powerControlOffsetSS*, that is associated with a parameter associated with the PDCCH order.

In some possible embodiments, the PDCCH order has same demodulation reference signal (DM-RS) antenna port quasi co-location (QCL) properties as a PDCCH for scheduling the RAR.

In some possible embodiments, a random access procedure triggered by the PDCCH order is a non-contention based random access procedure or a contention based random access procedure.

In some possible embodiments, a PDCCH for scheduling the RAR is received by using DMRS-RS antenna port QCL properties of a CORESET associated with type1-PDCCH common search space (CSS) set.

In some possible embodiments, each parameter in the plurality of parameters is associated with a PCI.

### V. Exemplary description of an apparatus for determining a TAC

In the case of the integrated unit, FIG. 6 is a block diagram illustrating functional units of an apparatus for determining a reference signal power according to an embodiment of the disclosure. The apparatus 600 for determining a reference signal power includes a determining unit 601.

It may be noted that the determining unit 601 may be a module unit configured to deal with a signal, data, information, etc., which is not specifically limited herein.

The apparatus 600 for determining a reference signal power may further include a storage unit. The storage unit is configured to store computer program codes or instructions executed by the apparatus 600 for determining a reference signal power. The storage unit may be a memory.

In addition, it may be noted that the apparatus 600 for determining a reference signal power may be a chip or a chip module.

The determining unit 601 may be integrated into another unit. For example, the determining unit 601 may be integrated into a communication unit.

The communication unit may be a communication interface, a transceiver, a transceiver circuit, etc.

For example, the determining unit 601 may be integrated into a processing unit.

The processing unit may be a processor or a controller, for example, a baseband processor, a baseband chip, a central processing unit (CPU), a general-purpose processor, a digital signal processor (DSP), an application-specific integrated circuit (ASIC), a field programmable gate array (FPGA), or other programmable logic devices, transistor logic devices, hardware components, or a combination thereof. Various exemplary logic blocks, modules, and circuits disclosed in the disclosure can be implemented or executed by the processing unit. The processing unit may also be a combination for implementing computing functions, for example, one or more microprocessors, a combination of DSP and microprocessor, or the like.

In specific implementation, the determining unit 601 is configured to perform any one operation performed by a terminal device/ chip/ module in the above method embodiments, for example, sending data or receiving data. The following provides detailed description.

In specific implementation, the determining unit 601 is configured to perform any one operation in the above method embodiments, and selectively invoke another unit to complete corresponding operations when performing data transmission such as sending. The following provides detailed description.

The determining unit 601 is configured to determine a reference signal power of a random access procedure triggered by a PDCCH order according to a synchronization signal and physical broadcast channel block (SSB) power *ss-PBCH-BlockPower* and/or a power offset of a non-zero power channel state information reference signal resource element (NZP-CSI-RS RE) and a synchronization signal and physical broadcast channel block (SSB) *powerControlOffsetSS,* that is associated with a parameter associated with the PDCCH order.

The PDCCH order has an association relationship with a parameter.

Types of multiple parameters may include at least one of a TCI status, an SRS resource, an SRS resource set, a TRP, *CORESETPOOLIndex*, and a TAG ID.

It can be seen that in the present disclosure, an association relationship between PDCCH orders and parameters is taken into considered, and the reference signal power of the random access procedure triggered by the PDCCH order is determined according to *ss-PBCH-BlockPower* and/or a *powerControlOffsetSS*, that is associated with a parameter associated with the PDCCH order, In this way, the performance of the PRACH transmission triggered by the PDCCH order is ensured, and the uplink synchronization enhancement is achieved through the reference signal power of the random access procedure triggered by the PDCCH order to adapt to a new communication scenario.

It may be noted that for specific implementation of each operation in the embodiments illustrated in FIG. 6, reference can be made to the description of the method embodiments above, which is not repeated herein.

In some possible embodiments, the PDCCH order may trigger a RAR, and the RAR may be used to determine the TAC of each parameter in the plurality of parameters.

In some possible embodiments, the PDCCH order may have the same DM-RS antenna port QCL properties as the PDCCH for scheduling the RAR.

In some possible embodiments, the PDCCH order may be associated with one parameter, and a TAC in the RAR triggered by the PDCCH order may be a TAC of the parameter associated with the PDCCH order.

In some possible embodiments, the association between PDCCH orders and parameters may be obtained by the network configuration/indication, pre-configuration, or protocol specification.

In some possible embodiments, the network configuration may include configuration by higher layer signaling and/or configuration by DCI of the PDCCH order.

In some possible embodiments, a first field in the DCI of the PDCCH order may be used to determine the TAC of each parameter in the plurality of parameters.

In some possible embodiments, the first field may indicate a parameter to which the TAC in the RAR triggered by the PDCCH order belongs.

In some possible embodiments, the first field may include at least one of an SS/PBCH index field, a random access preamble index field, another field in the DCI of the PDCCH order.

In some possible embodiments, if the first field includes said another field, the first filed may indicate that the SS/PBCH index field in the DCI of the PDCCH order is associated with a PCI.

In some possible embodiments, if the first field includes said another field, the first field is adjacent to a PRACH mask index field in the DCI of the PDCCH order.

In some possible embodiments, whether the first field is present in the DCI of the PDCCH order is configured by higher layer information.

In some possible embodiments, a TAC in a PDCCH-triggered RAR may have an association relationship with a parameter.

In some possible embodiments, the PDCCH-triggered RAR may include one or more TACs, each of the one or more TACs is associated with one of the multiple parameters.

In some possible embodiments, the association between TACs in PDCCH-triggered RARs and parameters may be obtained by the network configuration/indication, pre-configuration, or protocol specification.

In some possible embodiments, the network configuration may include configuration/indication by higher layer signaling and/or configuration by a field in the RAR.

In some possible embodiments, a random access procedure triggered by the PDCCH order is a non-contention based random access procedure or a contention based random access procedure.

In some possible embodiments, each parameter in the plurality of parameters is associated with a PCI.

### VII. Exemplary Description of Terminal Device

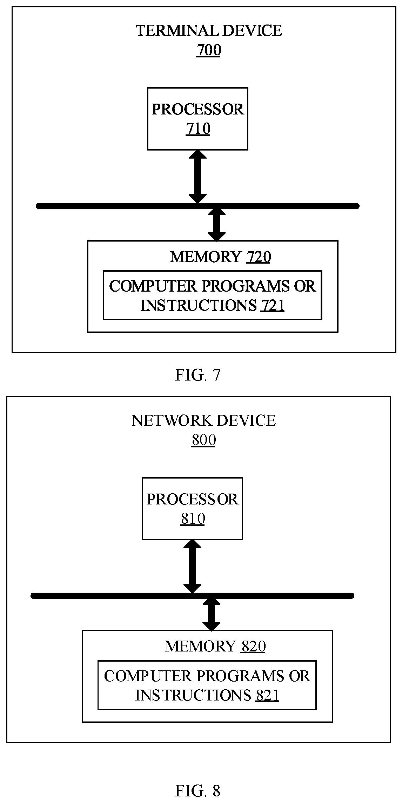

Refer to FIG. 7, where FIG. 7 is a schematic structural diagram of a terminal device 700 provided in an embodiment of the disclosure. The terminal device 700 includes a processor 710, a memory 720, and a communication bus configured to connect the processor 710 with the memory 720.

In some possible embodiments, the memory 720 includes, but is not limited to, a random access memory (RAM), a read-only memory (ROM), an erasable programmable ROM (EPROM), or a compact disc (CD)-ROM. The memory 720 is configured to store program codes executed by the terminal device 700 and data transmitted by the terminal device 700.

In some embodiments he terminal device 700 further includes a communication interface, where the communication interface is configured to receive and send data.

In some possible embodiments, the processor 710 may be one or more CPUs. In the case that the processor 710 is a CPU, the CPU may be implemented as a single-core CPU or multi-core CPU.

In some possible embodiments, the processor 710 may be a baseband chip, a CPU, a general-purpose processor, a DSP, an ASIC, an FPGA, or other programmable logic devices, transistor logic devices, hardware components, or a combination thereof.

In specific implementation, the processor 710 of the terminal device 700 is configured to execute computer programs or instructions 721 stored in the memory 720 to determine a TAC of each parameter in a plurality of parameters according to an RAR, where types of the plurality of parameters include at least one of a TCI state, an SRS resource, an SRS resource set, a TRP, a CORESET pool identifier, or a TAG identity.

It can be seen that, in order to enhance uplink synchronization so as to adapt to a new communication scenario, multiple parameters are considered in the present disclosure, where the parameters may be parameters involved in the new communication scenario. A TAC of each parameter in the multiple parameters is determined according to an RAR. Since the TAC of each parameter may indicate a TA of each parameter, the enhancement of uplink synchronization is achieved by the TA of each parameter to adapt to the new communication scenario.

It may be noted that for specific implementation of each operation, reference can be made to the corresponding description of the above method embodiments. The terminal device 700 may be configured to perform the above method embodiments of the disclosure, which is not repeated.

### VII. Exemplary Description of Network Device

Refer to FIG. 8, where FIG. 8 is a schematic structural diagram of a network device provided in an embodiment of the disclosure. The network device 800 includes a processor 810, a memory 820, and a communication bus configured to connect the processor 810 with the memory 820.

In some possible embodiments, the memory 820 includes, but is not limited to, an RAM, an ROM, an EPROM, or a CD-ROM. The memory 820 is configured to store relevant instructions and data.

In some possible embodiments, the terminal 800 further includes a communication interface, where the communication interface is configured to receive and send data.

In some possible embodiments, the processor 810 may be one or more CPUs. In the case that the processor 810 is a CPU, the CPU may be implemented as a single-core CPU or multi-core CPU.

In some possible embodiments, the processor 810 may be a baseband chip, a CPU, a general-purpose processor, a DSP, an ASIC, an FPGA, or other programmable logic devices, transistor logic devices, hardware components, or a combination thereof.

In some possible embodiments, the processor 810 of the network device 800 is configured to execute computer programs or instructions 821 stored in the memory 820 to send a random access response (RAR), the RAR being used to determine a TAC of each parameter in a plurality of parameters, where types of the plurality of parameters include at least one of a TCI state, an SRS resource, an SRS resource set, a TRP, a CORESET pool identifier, or a TAG identity

It can be seen that, in order to enhance uplink synchronization so as to adapt to a new communication scenario, multiple parameters are considered in the present disclosure, where the parameters may be parameters involved in the new communication scenario. A TAC of each parameter in the multiple parameters is determined according to an RAR. Since the TAC of each parameter may indicate a TA of each parameter, the enhancement of uplink synchronization is achieved by the TA of each parameter to adapt to the new communication scenario.

It may be noted that for specific implementation of each operation, reference can be made to the corresponding description of the above method embodiments. The network device 800 may be configured to perform the above method embodiments of the disclosure, which is not repeated.

### XI. Exemplary Description of Other Relevant Contents

In some possible embodiments, the method embodiments described above can be applied to or within a terminal device. That is to say, an execution subject of the foregoing method embodiment may be a terminal device, and may be a chip, a chip module, or a module, which is not specifically limited herein.

In some possible embodiments, the method embodiments described above can be applied to or within a network device. That is to say, an execution subject of the foregoing method embodiment may be a network device, and may be a chip, a chip module, or a module, which is not specifically limited herein.

A chip is further provided in embodiments of the disclosure. The chip includes a processor, a memory, and computer programs or instructions stored in the memory. The processor is configured to execute the computer programs or instructions to implement the operations described in the above method embodiments.

A chip is further provided in embodiments of the disclosure. The chip includes a processor and a communication interface. The processor is configured to implement the operations described in the above method embodiments.

A chip module is further provided in embodiments of the disclosure. The chip module includes a transceiver component and a chip. The chip includes a processor, a memory, and computer programs or instructions stored in the memory. The processor is configured to execute the computer programs or instructions to implement the operations described in the above method embodiments.

A computer-readable storage medium is further provided in embodiments of the disclosure. The computer-readable storage medium is configured to store computer programs or instructions. The computer programs or instructions are executed to implement the operations described in the above method embodiments.

A computer program product is further provided in embodiments of the disclosure. The computer program product includes computer programs or instructions. The computer programs or instructions are executed to implement the operations described in the above method embodiments.

A communication system is further provided in embodiments of the disclosure. The communication system includes a terminal device and a network device.

It may be noted that, for the sake of simplicity, various embodiments above are described as a series of action combinations. However, it will be appreciated by those skilled in the art that the disclosure is not limited by the sequence of actions described. Some operations in embodiments of the disclosure may be performed in other orders or simultaneously. In addition, it will be appreciated by those skilled in the art that the embodiments described in the specification are preferable embodiments, and the actions, the operations, the modules, and the units involved are not necessarily essential to the disclosure.

In the foregoing embodiments, the description of each embodiment has its own emphasis. For the parts not described in detail in one embodiment, reference may be made to related illustrations in other embodiments.

Steps of the method or algorithm described in embodiments of the present disclosure may be implemented by means of hardware, and may also be implemented by means of software instructions executed by a processor. The software instructions may consist of respective software modules, and the software modules may be stored in random access memory (RAM), flash memory, read-only memory (ROM), erasable programmable ROM (EPROM), electrically erasable programmable ROM (EEPROM), a register, a hard disk, a removable hard disk, a compact disc-read only memory (CD-ROM), or any other forms of storage medium known in the art. An exemplary storage medium is coupled to the processor such that the processor can read information from, and write information to, the storage medium. Certainly, the storage medium may also be a component of the processor, and the processor and the storage medium may be located in an application specific integrated circuit (ASIC). In addition, the ASIC may be located in a UE or a management device. Certainly, the processor and the storage medium may also exist in the UE or the management device as discrete components.

Those skilled in the art will appreciate that, all or part of the methods, the operations, or functions of relevant modules/units described in embodiments of the disclosure can be implemented through software, hardware, firmware, or any other combination thereof. When implemented by software, all or part of the functions can be implemented in the form of a computer program product or can be implemented by executing computer program instructions by the processor. The computer program product includes at least one computer program instruction. The computer program instructions may consist of corresponding software modules, where the software module may be stored in an RAM, a flash memory, an ROM, an EPROM, an electrically EPROM (EEPROM), a register, a hard disk, a mobile hard disk, a CD-ROM, or any other form of storage medium known in the art. The computer program instructions can be stored in a computer-readable storage medium, or transmitted from one computer-readable storage medium to another computer-readable storage medium. For example, the computer program instructions can be transmitted from one website, computer, server, or data center to another website, computer, server, or data center in a wired manner or in a wireless manner. The computer-readable storage medium can be any computer accessible usable-medium or a data storage device such as a server, a data center, or the like which integrates one or more usable media. The usable medium can be a magnetic medium (such as a soft disk, a hard disk, or a magnetic tape), an optical medium, or a semiconductor medium (such as a solid state disk (SSD)), etc.

Each module/unit in the apparatus or product above described in the above embodiments may be a software module/unit, a hardware module/unit, or may be partially a software module/unit and partially a hardware module/unit. For example, for each apparatus and product applied to or integrated into the chip, each module/unit included can be implemented by hardware such as circuits, or part of modules/units included can be implemented by software programs that run on a processor integrated into the chip, and another part (if existing) of modules/units included can be implemented by hardware such as circuits. Similar, for each apparatus and product applied to or integrated into the chip module or each apparatus and product applied to or integrated into the terminal, reference can be made to the above.

The embodiments described above describe in further detail purposes, technical solutions and advantages of the embodiments of the disclosure. It should be understood that, the above is only specific embodiments of embodiments of the disclosure, and are not used to limit the protection scope of embodiments of the disclosure. Any modification, equivalent substitution, improvement, and the like that is made on the basis of technical solutions of embodiments of the disclosure shall be included in the protection scope of embodiments of the disclosure.

## Claims

1. A method for determining a timing advance command, comprising:
determining a timing advance command (TAC) of each parameter in a plurality of parameters according to a random access response (RAR), wherein types of the plurality of parameters comprise at least one of a transmission configuration indicator (TCI) state, a sounding reference signal (SRS) resource, an SRS resource set, a transmission and reception point (TRP), a control resource set (CORESET) pool identifier, or a timing advance group (TAG) identity.

2. The method of claim 1, wherein determining the TAC of each parameter in the plurality of parameters according to the RAR comprises:
determining the TAC of each parameter in the plurality of parameters according to a physical downlink control channel (PDCCH) order that triggers the RAR.

3. The method of claim 2, wherein determining the TAC of each parameter in the plurality of parameters according to the PDCCH order that triggers the RAR comprises:
determining the TAC of each parameter in the plurality of parameters according to an association relationship between PDCCH orders that trigger RARs and parameters.

4. The method of claim 3, wherein the PDCCH order is associated with one parameter, and a TAC in the RAR is a TAC of a parameter associated with the PDCCH order.

5. The method of claim 3, wherein the association relationship is obtained by network configuration, pre-configuration, or protocol specification.

6. The method of claim 5, wherein the network configuration comprises configuration by higher-layer signaling and/or configuration by downlink control information (DCI) of the PDCCH order.

7. The method of claim 2, wherein determining the TAC of each parameter in the plurality of parameters according to the PDCCH order that triggers the RAR comprises:
determining the TAC of each parameter in the plurality of parameters according to a first field in DCI of the PDCCH order that triggers the RAR.

8. The method of claim 7, wherein the first field indicates a parameter to which a TAC in the RAR belongs.

9. The method of claim 7 or 8, wherein the first field comprises at least one of a synchronization signal/physical broadcast channel (SS/PBCH) index field, a random access preamble index field, or another field in the DCI.

10. The method of claim 7 or 8, wherein in response to the first field comprising another field, the first field indicates that an SS/PBCH index field in the DCI is associated with a physical cell identifier (PCI).

11. The method of any one of claims 7 to 10, wherein in response to the first field comprising another field, the first field is adjacent to a physical random access channel (PRACH) mask index field in the DCI.

12. The method of any one of claims 7 to 11, wherein whether the first field is present in the DCI is configured through higher-layer information.

13. The method of claim 1, wherein determining the TAC of each parameter in the plurality of parameters according to the RAR comprises:
determining the TAC of each parameter in the plurality of parameters according to an association relationship between TACs in triggered RARs and parameters.

14. The method of claim 13, wherein the RAR comprises one or more TACs, and each TAC is associated with one of the plurality of parameters.

15. The method of claim 13, wherein the association relationship is obtained by network configuration, pre-configuration, or protocol specification.

16. The method of claim 15, wherein the network configuration comprises configuration by higher-layer signaling and/or configuration by a field in the RAR.

17. The method of claim 1, wherein the RAR is triggered by the PDCCH order.

18. The method of claim 17, wherein a reference signal power of a random access procedure triggered by the PDCCH order is determined according to a synchronization signal and physical broadcast channel block (SSB) power *ss-PBCH-BlockPower* and/or a power offset of a non-zero power channel state information reference signal resource element (NZP-CSI-RS RE) and a synchronization signal and physical broadcast channel block (SSB) *powerControlOffsetSS*, that is associated with a parameter associated with the PDCCH order.

19. The method of claim 17, wherein the PDCCH order same demodulation reference signal (DM-RS) antenna port quasi co-location (QCL) properties as a PDCCH for scheduling the RAR.

20. The method of any one of claims 2 to 12 and 17 to19, wherein a random access procedure triggered by the PDCCH order is a non-contention based random access procedure or a contention based random access procedure.

21. The method of claim 1, wherein a PDCCH for scheduling the RAR is received by using DMRS-RS antenna port QCL properties of a CORESET associated with type1-PDCCH common search space (CSS) set.

22. The method of any one of claims 1 to 21, wherein each parameter in the plurality of parameters is associated with a PCI.

23. A method for determining a timing advance command, comprising:
sending a random access response (RAR), the RAR being used to determine a timing advance command (TAC) of each parameter in a plurality of parameters, wherein types of the plurality of parameters comprise at least one of a transmission configuration indicator (TCI) state, a sounding reference signal (SRS) resource, an SRS resource set, a transmission and reception point (TRP), a control resource set (CORESET) pool identifier, or a timing advance group (TAG) identity.

24. The method of claim 23, wherein the RAR is triggered by a physical downlink control channel (PDCCH) order.

25. The method of claim 24, wherein the PDCCH order has an association relationship with a parameter, and the association relationship is used to determine the TAC of each parameter in the plurality of parameters.

26. The method of claim 25, wherein the PDCCH order is associated with one of the plurality of parameters; and a TAC in the RAR is a TAC of the parameter associated with the PDCCH order.

27. The method of claim 26, wherein the association relationship is obtained by network configuration, pre-configuration, or protocol specification.

28. The method of claim 27, wherein the network configuration comprises configuration by higher-layer signaling and/or configuration by downlink control information (DCI) of the PDCCH order.

29. The method of claim 23, wherein a first field in DCI of the PDCCH order is used to determine the TAC of each parameter in the plurality of parameters.

30. The method of claim 29, wherein the first field indicates a parameter to which a TAC in the RAR belongs.

31. The method of claim 29 or 30, wherein the first field comprises at least one of a synchronization signal/physical broadcast channel (SS/PBCH) index field, a random access preamble index field, or another field in the DCI.

32. The method of claim 29 or 30, wherein in response to the first field comprising another field, the first field indicates that an SS/PBCH index field in the DCI is associated with a physical cell identifier (PCI).

33. The method of any one of claims 29 to 32, wherein in response to the first field comprising another field, the first field is adjacent to a physical random access channel (PRACH) mask index field in the DCI.

34. The method of any one of claims 29 to 33, wherein whether the first field is present in the DCI is configured through higher-layer information.

35. The method of claim 23, wherein a TAC in the RAR has an association relationship with a parameter, and the association relationship is used to determine the TAC of each parameter in the plurality of parameters.

36. The method of claim 35, wherein the RAR comprises one or more TACs, and each TAC is associated with one parameter.

37. The method of claim 35, wherein the association relationship is obtained by network configuration, pre-configuration, or protocol specification.

38. The method of claim 37, wherein the network configuration comprises configuration by higher-layer signaling and/or configuration by a field in the RAR.

39. The method of claim 24, wherein a reference signal power of a random access procedure triggered by the PDCCH order is determined according to a synchronization signal and physical broadcast channel block (SSB) power *ss-PBCH-BlockPower* and/or a power offset of a non-zero power channel state information reference signal resource element (NZP-CSI-RS RE) and a synchronization signal and physical broadcast channel block (SSB) *powerControlOffsetSS*, that is associated with a parameter associated with the PDCCH order.

40. The method of claim 24, wherein the PDCCH order same demodulation reference signal (DM-RS) antenna port quasi co-location (QCL) properties as a PDCCH for scheduling the RAR.

41. The method of any one of claims 24 to 34 and 39 to 40, wherein a random access procedure triggered by the PDCCH order is a non-contention based random access procedure or a contention based random access procedure.

42. The method of claim 23, wherein a PDCCH for scheduling the RAR is received by using DMRS-RS antenna port QCL properties of a CORESET associated with type1-PDCCH common search space (CSS) set.

43. The method of any one of claims 23 to 42, wherein each parameter in the plurality of parameters is associated with a PCI.

44. An apparatus for determining a timing advance command, comprising:
a determining unit configured to determine a timing advance command (TAC) of each parameter in a plurality of parameters according to a random access response (RAR), wherein types of the plurality of parameters comprise at least one of a transmission configuration indicator (TCI) state, a sounding reference signal (SRS) resource, an SRS resource set, a transmission and reception point (TRP), a control resource set (CORESET) pool identifier, or a timing advance group (TAG) identity.

45. A device for determining a timing advance command, comprising:
a sending unit configured to send a random access response (RAR), the RAR being used to determine a timing advance command (TAC) of each parameter in a plurality of parameters, wherein types of the plurality of parameters comprise at least one of a transmission configuration indicator (TCI) state, a sounding reference signal (SRS) resource, an SRS resource set, a transmission and reception point (TRP), a control resource set (CORESET) pool identifier, or a timing advance group (TAG) identity.

46. A terminal device, comprising a processor, a memory, and a computer program or instruction stored in the memory, wherein the processor is configured to execute the computer program or instruction to implement the method of any one of claims 1 to 22.

47. A network device, comprising a processor, a memory, and a computer program or instruction stored in the memory, wherein the processor is configured to execute the computer program or instruction to implement the method of any one of claims 23 to 43.

48. A chip, comprising a processor and a communication interface, wherein the processor is configured to execute the method of any one of claims 1 to 22 or the method of any one of claims 23 to 43.

49. A computer-readable storage medium, storing a computer program or instruction which, when executed, causes the method of any one of claims 1 to 22 or the method of any one of 23 to 43 to be implemented.
